# EUROPÄISCHE PATENTANMELDUNG

(11) **EP 3 922 608 A1**
(43) Veröffentlichungstag der Anmeldung: **15.12.2021**
(21) Anmeldenummer: 21177960.8
(22) Anmeldetag: 07.06.2021
(51) Int. Cl.: C02F 1/72, B01D 29/82, C02F 1/467, C02F 1/00, C02F 1/52, C02F 1/28, C02F 101/30, C02F 1/78, C02F 1/54

(54) **VERFAHREN UND VORRICHTUNG ZUR WASSERAUFBEREITUNG**

(30) Priorität: 09.06.2020 DE 102020115341
(71) Anmelder: Berthold, Jürgen, 90542 Eckental (DE)
(72) Erfinder: Berthold, Jürgen, 90542 Eckental (DE); Berthold, Hermann, 91338 Igensdorf (DE)
(74) Vertreter: Lindner Blaumeier Patent- und Rechtsanwälte

(57) **Zusammenfassung**

Verfahren zur Wasseraufbereitung, wobei das aufzubereitende Wasser durch eine Fördereinrichtung (2) von einem Zulauf (92) über mehrere Aufbereitungsstufen zu einem Ablauf (11) geführt wird, wobei
- wenigstens eine der Aufbereitungsstufen eine Oxidationsstufe (5, 6, 7) ist, in der im Wasser befindliche Fremdstoffe durch ein dem Wasser in oder vor der Oxidationsstufe (5, 6, 7) beigesetztes Oxidationsmittel (12) oxidiert werden, und
- wenigstens eine der Aufbereitungsstufen, der das Wasser nach der Verarbeitung durch die wenigstens eine Oxidationsstufe (5, 6, 7) zugeführt wird, eine Trennstufe (8, 9) ist, in der nach Verarbeitung in der wenigstens einen Oxidationsstufe (5, 6, 7) im Wasser befindliche Fremdstoffe durch Beisetzung wenigstens eines Trennmittels (14, 36), insbesondere eines Flockungsmittels und/oder von Aktivkohle, ausgefällt und abgeschieden werden.

## Beschreibung

Die Erfindung betrifft ein Verfahren sowie eine Vorrichtung zur Wasseraufbereitung.

In einer Vielzahl von Arbeits- und Wirtschaftsbereichen fällt Wasser an, das mit Partikeln, insbesondere mit Schwebstoffen bzw. Kolloiden, beladen ist. Häufig sollen diese Partikel, die beispielsweise Größen im Mikrometer- oder Nanometerbereich aufweisen können, von dem Wasser abgetrennt werden. Ein wesentlicher Anwendungsfall hierfür ist die Brauchwasseraufbereitung, um Wasser ausreichend aufzureinigen, dass es in Flüsse eingeleitet werden kann oder Ähnliches. Besonders vorteilhaft ist es, wenn unmittelbar Trinkwasser aus dem Brauchwasser gewonnen werden kann. Neben einer Filterung zur Entfernung von relativ großen Schwebstoffen wird hierzu insbesondere eine Flockung durch Beigabe von Flockungsmitteln und eine anschließende Sedimentation genutzt bzw. es kann Aktivkohle beigesetzt werden, insbesondere um Geruchs- bzw. Geschmacksstoffe und organische Verbindungen hieran anzulagern.

Ein bekanntes Problem ist hierbei, dass höhere Beladungen des Wassers mit organischen Molekülen, insbesondere mit größeren organischen Molekülen, selbst nicht oder nur sehr langsam ausflocken und auch die Ausflockungen von anderen Schwebstoffen stören können. Zudem ist insbesondere die Entfernung von metallorganischen Schwebstoffen aufwändig. Die genannten Probleme führen zu relativ langen Prozess- bzw. Standzeiten zur Wasseraufbereitung, womit hohe Durchsätze nur mit sehr großbauenden Aufbereitungsanlagen möglich sind.

Dies ist insbesondere problematisch, wenn eine Wasseraufbereitung lokal für einen einzelnen Betrieb oder relativ kleine Benutzergruppen erfolgen soll. Beispielsweise kann gewünscht sein, Wasser aufzubereiten, das aus einer Biogasanlage stammt und mit Fermentabfällen versetzt ist, oder dass es anderweitig mit organischen Abfällen, wie Fäkalien, Stroh, Gras, etc. beladen ist. Derartiges beladenes Wasser wird oft auch allgemein als "Gülle" bezeichnet. Selbst nach Abscheiden von relativ großteiligen Verunreinigungen, beispielsweise durch ein Pressen bzw. Filtern, verbleibt eine hohe Beladung des Wassers mit großen organischen Molekülen und metallorganischen Verbindungen, so dass die obig erläuterten Probleme resultieren.

Der Erfindung liegt somit die Aufgabe zugrunde, erreichbare Durchsätze bei einer Wasseraufbereitung bei gegebener Baugröße zu verbessern, bzw. die Nutzung einer kleinerbauenden Vorrichtung zu ermöglichen, die dennoch gute Durchsätze erreichen kann.

Die Aufgabe wird erfindungsgemäß durch ein Verfahren zur Wasseraufbereitung gelöst, wobei das aufzubereitende Wasser durch eine Fördereinrichtung von einem Zulauf über mehrere Aufbereitungsstufen zu einem Ablauf geführt wird, wobei
- wenigstens eine der Aufbereitungsstufen eine Oxidationsstufe ist, in der im Wasser befindliche Fremdstoffen durch ein dem Wasser in oder vor der Oxidationsstufe beigesetztes Oxidationsmittel oxidiert werden, und
- wenigstens eine der Aufbereitungsstufen, der das Wasser nach der Verarbeitung durch die wenigstens eine Oxidationsstufe zugeführt wird, eine Trennstufe ist, in der nach Verarbeitung in der wenigstens einen Oxidationsstufe der Oxidationsstufe im Wasser befindliche Fremdstoffen durch Beisetzung wenigstens eines Trennmittels, insbesondere eines Flockungsmittels und/oder von Aktivkohle, ausgefällt und abgeschieden werden.

Der Erfindung liegt die Idee zugrunde, der Trennstufe, in der ein an sich bekannter Fällungsprozess mit Hilfe des Trennmittels durchgeführt wird, eine Oxidationsstufe vorzuschalten, in der zumindest Teile der im Wasser befindlichen Fremdstoffe, insbesondere organische Moleküle, Viren, Bakterien oder andere Zellbildungen, sowie auch Pilze, Keime, Pestizide, Herbizide und Fungizide, durch Oxidation zerstört werden. Hierzu kann als Oxidationsmittel beispielsweise Kaliumpermanganat oder Wasserstoffperoxid zugesetzt werden. Durch später noch erläuterte unterstützende Maßnahmen kann erreicht werden, dass bereits relativ kleine Mengen von Oxidationsmitteln für einen großen Durchsatz ausreichend sind. In Versuchen war die Zugabe einer Kaliumpermanganatlösung mit einem Mischungsverhältnis von 1:1.000.000 ausreichend, wobei die Kaliumpermanganatlösung einen Gewichtsanteil von 1% Kaliumpermanganat aufwies. Zudem wurde erkannt, dass es auch bei einer Nutzung von mehreren Oxidationsstufen typischerweise ausreicht, Oxidationsmittel in der ersten dieser Oxidationsstufen beizusetzen, da in folgenden Oxidationsstufen noch nicht reagiertes Oxidationsmittel zur Reaktion herangezogen werden kann.

Die in der Trennstufe abgeschiedenen Fremdstoffe können somit zumindest zum Teil Reaktionsprodukte sein, die durch Oxidation der zunächst vorhandenen Fremdstoffe resultieren. Durch Vorlagerung der Oxidationsstufe kann somit der Anteil von insbesondere großen organischen Molekülen und metallorganischen Verbindungen in der wenigstens einen Trennstufe erheblich reduziert werden, womit dort bereits mit relativ kurzen Standzeiten und relativ geringem Zusatz von Trennmitteln gute Aufbereitungsergebnisse erreicht werden können. In einem Prototyp wurde beispielsweise in Verbindung mit später noch genauer erläuterten zusätzlichen Maßnahmen erreicht, dass ein Zusatz von 175g Aktivkohle und 175g Flockungsmittel zur Aufbereitung von 1m³ zu reinigendem Wasser auch dann ausreicht, wenn stark organisch beladenes Wasser, beispielsweise aus einer Biogasanlage, aufbereitet werden soll.

Wie aus obigem Beispiel hervorgeht, kann als Trennmittel insbesondere eine Mischung aus 50 Gew.% Aktivkohle und 50 Gew.% Flockungsmittel verwendet werden. Bedarfsgerecht kann von diesem Mischungsverhältnis jedoch auch abgewichen werden. Als Flockungsmittel werden typischerweise dreiwertige Metallsalze verwendet. Es können jedoch auch andere Hydroxid bildende bzw. organische Flockungsmittel verwendet werden.

Die Fördereinrichtung umfasst insbesondere mehrere Leitungsnetzabschnitte, die Verarbeitungseinrichtungen, die die einzelnen Aufbereitungsstufen implementieren, untereinander bzw. mit dem Zu- bzw. Ablauf verbinden. In den einzelnen Leitungsnetzabschnitten kann der Wassertransport jeweils durch die Schwerkraft oder eine Pumpe erfolgen. Die Leitungsnetzabschnitte können zudem zumindest zum Teil ein gesteuertes Ventil oder auch mehrere gesteuerte Ventile umfassen, um beispielsweise in verschiedenen Abschnitten eines Verarbeitungszyklus Wasser von verschiedenen Quellen bzw. zu verschiedenen Zielen zu transportieren. Die Fördereinrichtung bzw. ihre Komponenten, also insbesondere Pumpen und Ventile, sowie die die einzelnen Aufbereitungsstufen implementierende Verarbeitungseinrichtungen können durch eine gemeinsame Steuereinrichtung gesteuert werden.

Vorteilhaft kann in der Oxidationsstufe oder in wenigstens einer der Oxidationsstufen eine Elektrolyse des Wassers durch eine Elektrolyseeinrichtung erfolgen. Hierzu können in einem jeweiligen Behälter, in dem das Wasser aufgenommen ist bzw. der durch das Wasser durchströmt wird, Elektroden, beispielsweise Metallplatten, angeordnet sein, die durch eine Elektrolyseeinrichtung mit Spannung beaufschlagt werden. In Prototypen wurden gute Ergebnisse mit Spannungen im Bereich zwischen 10 und 12 V erreicht. Die Elektrodengeometrie wurde so gewählt, dass bei einem typischen Salzgehalt des Wassers in der jeweiligen Oxidationsstufe Ströme von ca. 3 A resultieren. Hierbei kann der Strom insbesondere gemessen werden, um einen Salzgehalt des Wassers zu bestimmen. Um eine Salzablagerung an den Elektroden zu vermeiden, kann die Polarität der Spannung, also der Plus- und Minuspol, regelmäßig, beispielsweise einmal pro Minute, gewechselt werden.

Durch die Elektrolyse des Wassers resultiert zumindest lokal im Bereich der Elektroden eine Erhöhung der Konzentration von H₃O⁺- bzw. OH⁻-Ionen. Hierdurch ist die Aktivierungsenergie für eine Hydrolyse von Fremdstoffen reduziert, da das Wasser im Rahmen dieser Hydrolyse nicht gespalten werden muss. Insbesondere können die OH⁻-Ionen dazu beitragen, organische Moleküle zu oxidieren.

Wird innerhalb der Oxidationsstufe eine relativ hohe Strömungsgeschwindigkeit genutzt, wie es beispielsweise bei Nutzung der später noch erläuterten Walzenbaugruppe der Fall sein kann, so kann der Transport der genannten Ionen aufgrund der Fluidströmung erheblich schneller sein als Diffusionsprozesse, so dass eine erhöhte lonenkonzentration auch in Bereichen einer zur Oxidation genutzten Vorrichtung erhöht sein kann, die relativ weit von den Elektroden beabstandet sind.

Neben der erläuterten Erhöhung der lonenkonzentration resultieren aus der Elektrolyse zudem hohe Sauerstoff- bzw. Ozonkonzentrationen in der Luft oberhalb der Wasseroberfläche. An der Wasseroberfläche ist somit die Oxidation von Fremdstoffen weiter begünstigt. Dies ist insbesondere relevant, wenn im Rahmen des Verfahrens die Oberfläche des Wassers vergrößert wird, beispielsweise durch die später noch erläuterte Walzenbaugruppe.

Vorzugsweise wird dem Wasser ein Tensid beigemischt, insbesondere bevor es der Oxidationsstufe oder den Oxidationsstufen zugeführt wird. Ein Zusetzen von Tensiden zu dem Wasser ist zunächst kontraintuitiv, da Tenside insbesondere dazu führen, dass nicht polare Moleküle, also insbesondere viele organische Moleküle, zunächst besser im Wasser gelöst werden können, was einem Ausfällen solcher Fremdstoffe zunächst entgegenzuwirken scheint. In dem erfindungsgemäßen Verfahren ist die Beisetzung eines Tensids dennoch vorteilhaft.

Wie bereits erläutert, können einige Fremdstoffe nicht oder nur mit hohem Materialeinsatz bzw. langen Prozesszeiten unmittelbar aus dem Wasser ausgefällt werden, weshalb diese im erfindungsgemäßen Verfahren, wie obig erläutert, zunächst durch Oxidation oder Hydratisierung zersetzt und die Reste dieser Zersetzung anschließend ausgefällt werden sollen. Hierbei ist es jedoch problematisch, dass insbesondere hydrophobe Fremdstoffe in Wasser Kolloide aus mehreren Molekülen bilden, so dass eine Reaktion zur Oxidation oder Hydratisierung nur für jene Moleküle möglich ist, die unmittelbar an der Oberfläche eines solchen Kolloids liegen. Dies senkt bereits die Reaktionsgeschwindigkeit.

Erschwerend kann hinzukommen, dass Kolloide und andere Schwebstoffe von einer Hydrathülle umgeben sein können, die die obig erläuterten Reaktionen weiter unterdrückt und somit die Prozesszeit weiter verlängert. Entsprechende Hydrathüllen können sich aufgrund der starken Polarität von Wassermolekülen clusterartig um Ionen bzw. polare Moleküle bilden. Auch nicht oder wenig polare Moleküle können jedoch von einer Hydrathülle umgeben sein. So ist beispielsweise der Effekt der wassermeidenden Hydration bekannt, bei der allein das Vorhandensein von nicht oder wenig polaren Molekülen die Bewegungsfreiheit des umgebenden Wassers einschränkt und somit zur Bildung von Strukturen mit einer gewissen Stabilität im umgebenden Wasser führen kann.

Durch die Nutzung von Tensiden können Cluster von mehreren Molekülen aufgebrochen werden und die Problematik von Hydrathüllen kann reduziert werden. Die hierdurch erreichte Vereinzelung von Fremdstoffen im Wasser erleichtert die Oxidation und Hydratisierung der Fremdstoffe und somit die Zerlegung der Fremdstoffe in kleinere Komponenten. Zudem kann durch eine solche Vereinzelung auch eine Flockung bzw. eine Anbindung an Aktivkohle beschleunigt werden, da die obig erläuterten Hemmungen der Reaktionen vermieden werden. Die erläuterte Wirkung der Tenside tritt besonders in der später noch erläuterten Walzenbaugruppe zur Oberflächenvergrößerung hervor. Da die erläuterten Effekte jedoch auch dann auftreten, wenn beispielsweise das Wasser für einen gewissen Zeitraum in einem Pufferbehälter steht oder dort gerührt wird, ist es vorteilhaft, die Tenside bereits frühzeitig in das Wasser einzubringen, beispielsweise unmittelbar nach einer später noch erläuterten Abtrennung von Feststoffen durch Pressprozesse bzw., falls solche Pressprozesse nicht genutzt werden, unmittelbar nach der Zuführung des Wassers zu einer genutzten Vorrichtung zur Wasseraufbereitung.

Nach der Aufbereitung des Wassers in der Trennstufe oder wenigstens einer der Trennstufen kann ein Teil des Wassers, der eine erhöhte Konzentration an ausgefällten Fremdstoffen enthält, durch die Fördereinrichtung zurück zu der Oxidationsstufe oder zu einer der Oxidationsstufen geführt werden. Hierdurch wird insbesondere erreicht, dass auch das in der Trennstufe beigesetzte Trennmittel, das beispielsweise schon mit Fremdstoffen beladen sein kann, in die Oxidationsstufe eingebracht wird und dann unmittelbar dazu genutzt werden kann, Teile der dort vorhandenen Fremdstoffe auszuflocken. Da das Trennmittel bereits in der Trennstufe genutzt wurde, können jedoch beispielsweise bereits relativ große Flocken vorhanden sein, an die sich zusätzliche Fremdstoffe anlagern können. Durch das beschriebene Vorgehen wird somit die Wirkung des zugesetzten Trennmittels verbessert, wodurch der Materialeinsatz reduziert werden kann. Zudem führt die Nutzung des Trennmittels in der Oxidationsstufe dazu, dass in dieser Oxidationsstufe bzw. in folgenden Oxidationsstufen bereits geringere Fremdstoffkonzentrationen vorliegen, was bezüglich der weiteren Aufbereitung vorteilhaft sein kann.

Die Abtrennung jenes Teils des Wassers, der eine erhöhte Konzentration an ausgewählten Fremdstoffen enthält, kann dadurch realisiert werden, dass zwei Ablauf- beziehungsweise Absaugöffnungen in verschiedener Höhe genutzt werden, wobei über die höher liegende Öffnung das aufbereitete Wasser mit geringerem Fremdstoffgehalt abgeführt wird, während die tiefer liegende Öffnung, die beispielsweise bodenseitig angeordnet sein kann beziehungsweise innerhalb der unteren 20 oder 30 Prozent der Behälterhöhe liegen kann, dazu dienen kann, das Sediment, also Wasser mit hohem Anteil von ausgefallenen Fremdstoffen, abzuführen.

In dem erfindungsgemäßen Verfahren kann in der Oxidationsstufe oder in wenigstens einer der Oxidationsstufen und/oder in der Trennstufe oder in wenigstens einer der Trennstufen das Wasser für ein vorgegebenes Zeitintervall in einem jeweiligen Pufferbehälter gehalten werden, bevor es durch die Fördereinrichtung zu einer folgenden Aufbereitungsstufe geführt wird. Für Flockungs- beziehungsweise allgemeine Ausfallprozesse, wie sie in der Trennstufe beziehungsweise den Trennstufen und, wie obige erläutert, optional auch in der Oxidationsstufe beziehungsweise zumindest in Teilen der Oxidationsstufen, genutzt werden können, ist ein kontinuierlicher Wasserfluss problematisch. Es kann daher vorteilhaft sein, zumindest Teile der Aufbereitungsschritte in Pufferbehältern durchzuführen, in denen das Wasser nach einer Befüllung für das vorgegebene Zeitintervall steht.

Das Zeitintervall kann fest vorgegeben sein. Beispielsweise kann in bestimmten Taktzyklen das Wasser jeweils um eine Aufbereitungsstufe weitergeführt werden. Es ist jedoch auch möglich, das Zeitintervall in Abhängigkeit von beim Betrieb der zur Aufarbeitung genutzten Vorrichtung erfassten Messgrößen vorzugeben. Beispielsweise kann das Zeitintervall dann beendet werden, wenn ein bestimmter Füllstand eines bestimmten Behälters erreicht wird oder Ähnliches.

In zumindest einem der Pufferbehälter kann ein Rührwerk angeordnet sein, das während eines Teils des Zeitintervalls betrieben wird und während eines Teils des Zeitintervalls ruht. Durch einen Betrieb des Rührwerks können Reaktionsprozesse im Pufferbehälter, beispielsweise eine Oxidation beziehungsweise Hydratisierung von Fremdstoffen beziehungsweise eine Anbindung von Fremdstoffen an Tenside, Aktivkohle oder andere Trennmittel, beschleunigt werden. Ein Ruhen des Rührwerks dient insbesondere dazu, dass sich an das oder eines der Trennmittel gebundene Fremdstoffe absetzen können, so dass sie beispielsweise bodenseitig aus dem jeweiligen Pufferbehälter abgeführt werden können.

Das Wasser kann nach der Trennstufe oder nach einer der Trennstufen und vor dem Ablauf durch einen Feinfilter mit einer Porengröße zwischen 50 µm und 0,5 µm oder zwischen 30 µm und 20 µm geführt werden. In Prototypen wurden beispielsweise Feinfilter mit 25 µm und 1 µm Porengröße mit gutem Erfolg getestet. Durch den Feinfilter können beispielsweise sehr feine Flocken oder sehr kleine Aktivkohlepartikel, für die eine Abscheidung durch die vorangehend erläuterten Absetzprozesse relativ lange dauern würde, zurückgehalten werden, so dass in der Trennstufe beziehungsweise den Trennstufen beziehungsweise in der Oxidationsstufe oder den Oxidationsstufen, soweit dort ebenfalls ein Absetzen erfolgt, relativ kurze Prozesszeiten genutzt werden können. Beispielsweise wurde in Prototypen erkannt, dass eine Standzeit des Rührwerks von ca. 30 Sekunden ausreichend sein kann, um beispielsweise nach einem Betrieb des Rührwerks für 10 Sekunden eine ausreichende Absetzung von größeren Flocken und Aktivkohlepartikeln zu erreichen. Kleinere Flocken und Ähnliches können somit durch den Feinfilter abgeschieden werden, ohne dass dieser schnell durch große Partikel zugesetzt wird. Durch diese Kombination können somit hohe Wasserdurchsätze bei relativ kurzen Prozesszeiten erreicht werden.

Als der Feinfilter kann ein becherförmiger Feinfilter verwendet werden, der in einem Feinfilterbehälter, insbesondere um eine Hochachse drehbar, angeordnet ist, wobei das Wasser von der Trennstufe oder von wenigstens einer der Trennstufen dem Feinfilter über eine offene Oberseite des Feinfilters zugeführt wird. Durch die beschriebene Anordnung kann durch die umlaufende Seitenwand des Feinfilters eine große Filterfläche erreicht werden, womit ein hoher Durchsatz und ein langsames Zusetzen des Feinfilters resultieren.

Der Feinfilterbehälter kann mehrere seitliche Öffnungen aufweisen, die durch eine Pumpe durch dem Feinfilterbehälter entnommenes Wasser beschickt werden, um den Feinfilter zu spülen. Hierbei kann der Feinfilter insbesondere rotieren, beispielsweise angetrieben durch einen Motor, um ein Spülen der gesamten Seitenwand des Feinfilters durch an einer Seite angeordnete Öffnungen, beispielsweise Düsen, zu erreichen. Ohne einen solchen Spülprozess würde über eine längere Betriebszeit der zur Durchführung des Verfahrens genutzten Vorrichtung ein zunehmender Verschluss der Poren des Feinfilters resultieren. Das Spülen führt somit insgesamt zu höheren Durchsätzen und längeren Wartungsintervallen.

Um eine hohe Wirksamkeit dieses Spülvorgangs zu erreichen, ist es vorteilhaft, das Wasser zunächst weitgehend aus dem Feinfilter beziehungsweise Feinfilterbehälter zu entnehmen. Dies würde im einfachsten Fall ausschließlich über den Ablauf erfolgen. In einer besonders vorteilhaften Ausgestaltung kann eine weitere Entleerung jedoch dadurch erfolgen, dass dem Feinfilter beziehungsweise dem Feinfilterbehälter zusätzliches Wasser entnommen wird, um es zur Vorfüllung eines Behälters, insbesondere eines Pufferbehälters, einer Oxidationsstufe zu nutzen.

Somit kann ein Teil des Wassers aus dem Feinfilterbehälter oder aus dem Innenraum des Feinfilters entnommen und der Oxidationsstufe oder wenigstens einer der Oxidationsstufen zugeführt werden. Hierdurch wird einerseits die Fremdstoffkonzentration in dieser Oxidationsstufe gesenkt, was , insbesondere bei Nutzung der später noch erläuterten Walzenbaugruppe, zu einer besseren Aufarbeitung der Fremdstoffe führen kann. Zugleich können verbleibende Fremdstoffe, die sich beispielsweise nach einem Spülprozess im Feinfilter selbst bodenseitig ablagern, durch eine Absaugöffnung des Feinfilters entnommen werden, wodurch Wartungsintervalle und Durchsätze weiter verbessert werden können. Zudem führt die Entnahme von Wasser aus dem Feinfilterbehälter zu einer Absenkung des Wasserstands in diesem, so dass ein größerer Teil der Fläche des Feinfilters gespült werden kann.

Über eine Dosiereinrichtung kann in der Oxidationsstufe oder in wenigstens einer der Oxidationsstufen dem Wasser zusätzliches Trennmittel beigesetzt werden. Hierzu kann insbesondere ein zusätzliches Trennmittelreservoir genutzt werden, in dem das gleiche Trennmittel beziehungsweise die gleiche Mischung von Trennmitteln genutzt werden kann, wie sie auch in der Trennstufe genutzt wird, oder auch ein anderes Trennmittel beziehungsweise eine andere Trennmittelmischung. Die Beigabe zusätzlichen Trennmittels kann insbesondere nur dann erfolgen, wenn eine genutzte Steuereinrichtung über eine entsprechende Sensorik erkennt, dass höhere Trennmittelkonzentrationen erforderlich sind. Dies kann beispielsweise zweckmäßig sein, wenn anhand der Elektrodenströme bei einer Elektrolyse erkannt wird, dass der Salzgehalt im Wasser modifiziert werden sollte.

Wenigstens eine der Aufbereitungsstufen kann eine Pressstufe sein, in der eine Presseinrichtung verwendet wird, um die Flüssigkeit durch eine Filtereinrichtung hindurchzupressen, bevor sie der Oxidationsstufe zugeführt wird. Zur Abscheidung von relativ groben Feststoffen können übliche Pressen, beispielsweise eine Schneckenpresse, verwendet werden, die zugeführtes Material gegen ein Sieb presst, um anschließend das Presswasser wie obig erläutert weiter zu verarbeiten. Sind im Wasser jedoch bereits nur relativ kleinteilige Feststoffe vorhanden beziehungsweise dann, wenn die Pressstufe eine zweite Pressstufe nach der erläuterten Grobpressung bildet, kann eine Feinpresse verwendet werden, in der beispielsweise ein sehr kleinporiges Filtervlies verwendet wird oder Ähnliches. Dies wird später noch genauer erläutert werden.

Dem Wasser kann in der oder vor Erreichen der Oxidationsstufe oder wenigstens einer der Oxidationsstufen Trennmittel beigesetzt werden, wobei nach der Aufbereitung des Wassers der jeweiligen Oxidationsstufe ein Teil des Wassers, der eine erhöhte Konzentration an ausgefällten Fremdstoffen enthält, durch die Fördereinrichtung zurück zu der Pressstufe oder zu einer der Pressstufen geführt wird. Die Beisetzung des Trennmittels kann vorzugsweise dadurch erfolgen, dass, wie obig erläutert, ein Teil des Wassers aus der Trennstufe zu der Oxidationsstufe oder einer vorangehenden Oxidationsstufe zurückgeführt wird. Ergänzend oder alternativ kann die obig erläuterte Zusetzung von Trennmittel über eine Dosiereinrichtung der Oxidationsstufe erfolgen.

Durch die Rückführung des stark fremdstoffbeladenen Wassers zur Pressstufe werden dort große Flocken und Ähnliches als Feststoff abgeschieden. Sehr kleine Flocken können weiterhin im Rahmen der Flockung genutzt werden. Diese sind noch ausreichend klein, dass sie nach dem Pressvorgang im Wasser verbleiben und somit wiederverwendet werden können. Durch das beschriebene Vorgehen kann die Wasseraufbereitung mit sehr geringem Materialeinsatz erfolgen.

Als die oder eine der Pressstufen kann eine Filterpresse verwendet werden, die ein Gehäuse aufweist, dem das Wasser zugeführt wird, wobei die Presseinrichtung in dem Gehäuse angeordnet ist und um eine vertikale Achse rotiert, wobei die Presseinrichtung wenigstens ein um eine, zur vertikalen Achse unter einem Winkel stehende, Drehachse rotierendes, im Querschnitt rundes Presselement mit einem aus einem elastischen Material gebildeten Außenmantel aufweist, mit dem das Presselement auf der Filtereinrichtung abrollt, wobei die Filtereinrichtung ein Filtermittel sowie eine dem Filtermittel vorgeschaltete, mehrere zum Presselement hin offene Durchbrechungen aufweisende Filterplatte umfasst, wobei jede der Durchbrechungen einen sich zum Filtermittel hin reduzierenden Querschnitt aufweist.

Die Filterpresse zeichnet sich durch ein Presselement aus, das um zwei Achsen drehbar ist. Zum einen ist das Presselement um eine zentrale, vertikal stehende Drehachse drehbar. Es erstreckt sich unter einem Winkel von der Drehachse weg, so dass es bei einer Rotation der Drehachse eine 360°-Drehung vollzieht. Darüber hinaus ist die Presseinrichtung selbst um eine zweite, zur vertikalen Achse unter einem Winkel stehende Drehachse drehbar. Das heißt, dass sich das Presselement während einer 360°-Rotation um die vertikale Achse auch mehrfach um sich selbst dreht.

Das Presselement selbst ist rund, also walzenförmig und weist einen Außenmantel aus einem elastischen Material auf. Mit diesem Außenmantel wälzt es während einer 360°-Drehung auf der Filtereinrichtung ab, wobei es mit einem entsprechenden Druck, also vorgespannt, mit dem elastischen Außenmantel an der Filtereinrichtung anliegt. Die Filtereinrichtung selbst weist ein Filtermittel auf, das über den Durchmesser der Filter- oder Sieböffnungen definiert, welche maximale Größe ein Partikel haben kann, um durch das Filtermittel zu gelangen und welche Partikel zurückgehalten werden. Diesem Filtermittel, das beispielsweise ein Lochfilter aus einem dünnen perforierten Filterblech oder einer perforierten, vorzugsweise reißfesten Kunststofffolie ist, ist zum Presselement hin vorgeschaltet eine Filterplatte zugeordnet, die eine Vielzahl von zum Presselement hin offenen Durchbrechungen aufweist. Die Durchbrechungen ändern ihren Querschnitt, gesehen vom Presselement zum Filtermittel, wobei sich der Durchbrechungsquerschnitt in dieser Richtung reduziert, das heißt, dass die Querschnittsfläche zum Filtermittel hin abnimmt.

Rotiert nun die Presseinrichtung um die vertikale Achse, so wälzt die hierdurch umlaufende Presseinrichtung mit dem elastischen Außenmantel auf der Filterplatte ab und dreht sich dabei um sich selbst. Während dieser Drehbewegung drückt der elastische Außenmantel gegen die Filterplatte und wird dabei deformiert. Gleichzeitig drückt der Außenmantel aber auch die mit den Partikeln beladene Flüssigkeit in die Durchbrechungen der Filterplatte, die sich wie beschrieben zum Filtermittel hin verjüngen. Hierdurch und durch den Umstand, dass es sich um einen elastischen Außenmantel handelt, wird innerhalb der sich beim Überrollen schließenden Durchbrechung zunehmend der Druck erhöht, was dazu führt, dass die Flüssigkeit und feine, das Filtermittel passierende Partikel durch das Filtermittel gepresst werden, während gleichzeitig größere Partikel in der Durchbrechung vom Filtermittel zurückgehalten werden. Durch die Druckerhöhung innerhalb der jeweiligen Durchbrechung, resultierend aus dem Umstand, dass sich das elastische Material in die Durchbrechung eindrückt, wird also die Flüssigkeit aus der Durchbrechung gepresst. Zurück bleiben die abgetrennten Partikel. Es bildet sich demzufolge ein Filterkuchen aus den zusammengepressten, abgetrennten Partikeln.

Rollt nun das Presselement weiter, so öffnet sich die Durchbrechung wieder. Die ausgepressten Partikel respektive der Filterkuchen haftet an dem elastischen Außenmantel und wird beim Wegdrehen des Presselements aus der Durchbrechung mitgenommen und aus der Durchbrechung bewegt, wobei dies durch den sich ergebenden, abnehmenden Druck aufgrund des sich entfernenden respektive aus der Durchbrechung gezogenen Materials unterstützt wird. Der zusammengepresste Filterkuchen wird also beim Wegrollen des Presselements automatisch aus der Durchbrechung gezogen respektive gesaugt. Der Filterkuchen löst sich bei fortgesetzter Bewegung des Presselements vom elastischen Außenmantel und schwimmt in der mit Partikeln beladenen Flüssigkeit, wobei der Filterkuchen, resultierend auf Grund seines Gewichts, absinkt und zu einem Auffang- oder Sammelbereich gelangt, von wo aus er als Dickschlamm dann abgezogen werden kann. Das durchgepresste, gefilterte Wasser sammelt sich gleichermaßen in einem entsprechenden Sammelbereich, von wo aus es abgezogen werden kann.

Durch die beschriebene Ausgestaltung der Filterpresse kann ein nahezu kontinuierlicher Betrieb erreicht werden, bei dem das Durchpressen des Wassers durch das Filtermittel gleichzeitig mit der Selbstreinigung der Filtereinrichtung erfolgt. Dies ermöglicht es, dem Gehäuse kontinuierlich fremdstoffbeladenes Wasser zuzuführen und das gefilterte Wasser abzuziehen. Der verbleibende Filterkuchen beziehungsweise Dickschlamm kann wahlweise kontinuierlich oder zu bestimmten Zeiten abgesaugt oder anderweitig aus dem Gehäuse entfernt werden.

Das jeweilige Presselement kann beispielsweise eine kegelstumpfartige Form aufweisen. Zudem kann die Filtereinrichtung kegelstumpfförmig sein. Der Filtereinrichtung kann ein Sammelbehälter für die durchgepresste Flüssigkeit nachgeschaltet sein. Vorzugsweise weist die Filtereinrichtung mittig eine Öffnung auf, durch die die vertikale Achse verläuft und durch die insbesondere Filterkuchen aus komprimierten Partikeln in einen Sammelbehälter fallen können.

In der oder wenigstens einer der Oxidationsstufen kann eine Walzenbaugruppe zur Vergrößerung der Oberfläche des Wassers verwendet werden, die wenigstens eine Welle, die jeweils wenigstens eine Walze trägt, einen Antrieb für die wenigstens eine Welle, eine oberhalb der jeweiligen Walze angeordnete Wasserzuführung, und eine der jeweiligen Walze zugeordnete Auffangwanne für das Wasser umfasst, wobei die Walze zwei in Radialrichtung beabstandete, zylindermantelförmige Mantelflächen aufweist, die jeweils als Gitter ausgebildet sind und an der Unterseite der Walze in die Auffangwanne hineinragen, wobei das Wasser durch die jeweilige Wasserzuführung zu der jeweiligen Walze geführt wird, wobei die jeweilige Walze durch den Antrieb angetrieben wird.

In der Walzenbaugruppe strömt das Wasser, insbesondere über bzw. durch die als Gitter ausgebildeten Mantelflächen, in die Auffangwanne und wird dort zunächst zurückgehalten. Durch die Rotation der Walze werden, je nach Wasserstand in der Auffangwanne, eine oder beide gitterförmigen Mantelflächen durch das Wasser geführt und verwirbeln es bzw. nehmen es mit. Hierdurch entsteht zunächst eine hohe Dynamik bzw. eine turbulente Strömung zwischen den Mantelflächen und somit eine gute Durchmischung, die dazu beitragen kann, in dem Wasser ablaufende Reaktionen zur Wasseraufbereitung, beispielsweise eine Hydratisierung von Schwebstoffen, zu beschleunigen. Zudem wird Luft aus der Umgebung der Walze in das Wasser eingebracht, was einerseits zur Oxidation von Schwebstoffen beitragen kann und andererseits zu einer Schaumbildung und somit zu einer Oberflächenvergrößerung des Wassers führt, insbesondere wenn das Wasser Tenside oder andere Schaumbildner enthält. In Versuchen resultierte beispielsweise für eine Wassermenge von 2 l Wasser kurzfristig ein Schaumvolumen von ungefähr 1 m³, dessen Oberfläche auf ungefähr 100000 m² geschätzt werden kann.

Wesentlich ist hierbei, dass die als Gitter ausgebildeten Mantelflächen zugleich als Schaumzerleger wirken, womit einzelne Luftblasen des Schaums typischerweise nur eine Lebenszeit von wenigen ms, beispielsweise von 1 - 2 ms, aufweisen. Um einen schnellen Aufbau und eine schnelle Zerlegung von Schaum zu erreichen, werden vorzugsweise Drehzahlen der Welle bzw. Wellen von mehr als 100 U/min verwendet. Beispielsweise können Drehzahlen zwischen 300 U/min und 3000 U/min, insbesondere zwischen 500 U/min und 2000 U/min, speziell zwischen 800 U/min und 1200 U/min, beispielsweise eine Drehzahl von 1000 U/min, verwendet werden.

Durch das schnelle Aufbauen und Zerlegen von Schaum kann trotz der hohen kurzfristig bereitgestellten Oberfläche ein hoher Durchsatz erreicht werden. In Versuchen mit einer Walzenbaugruppe mit 6 Wellen, die jeweils zwei Walzen tragen, mit einem Bauraumbedarf von ca. 0,75 m³, konnte ein Durchsatz von ca. 30000 l/h erreicht werden.

Die Führung des Wassers durch die Walzenbaugruppe kann im Rahmen einer Wasseraufbereitung insbesondere dazu dienen, zunächst ein Gemenge mit freischwebenden Stoffen herzustellen, die anschließend in der nachgelagerten Trennstufe ausgeflockt bzw. an Aktivkohle gebunden werden können, um sie durch Sedimentierung von dem Wasser abzuscheiden. Hierbei werden durch das obig beschriebene Vorgehen mehrere Vorteile erreicht. So führt die Schaumbildung bzw. die Ausbildung einer sehr großen Wasseroberfläche dazu, dass sich bei einer Aufbereitung von Wasser Tenside an dieser Oberfläche eine Art Filterfläche bilden, und Kolloide aus hydrophoben bzw. wenig polaren Stoffen somit durch Anlagerung dieser Stoffe an die Tenside gut aufgelöst werden können. Hierbei kann es sich um Stoffe handeln, die bereits vorangehend im Wasser vorhanden waren oder insbesondere auch um Stoffe, die im Rahmen einer Vorverarbeitung oder auch erst innerhalb der Walzenbaugruppe durch Oxidation bzw. Hydratisierung entstanden sind. Somit werden insbesondere größere organische Moleküle, Viren, Bakterien und Ähnliches durch Oxidation bzw. Hydratisierung in kleinere Komponenten aufgebrochen, die an Tenside gebunden werden können, wodurch wiederum ein Ausflocken ermöglicht wird.

Zudem führt die hochdynamische, insbesondere turbulente, Strömung des Wassers im Bereich der Mantelflächen und insbesondere die rasche Schaumbildung und Zerstörung einerseits zu einer Beschleunigung von Reaktionen im Wasser, also insbesondere der Hydratisierung von Fremdstoffen durch OH⁻ bzw. H₃O⁺-Radikale. Wie später noch erläutert werden wird, kann zudem Luft mit hohem Sauerstoff- bzw. Ozongehalt in den Walzenbereich geführt werden, die aufgrund der großen Wasseroberfläche zur Oxidation von Fremdstoffen beitragen kann. Da die Reste entsprechender Reaktion, soweit sie wenig polar sind, wie obig erläutert durch die Filterfläche der an der Oberfläche befindlichen Tenside gebunden werden, können sie bei einem nachgelagerten Schritt gut ausgeflockt werden.

Die äußere der Mantelflächen kann von einem Boden der Auffangwanne einen Abstand von weniger als 3 mm oder weniger als 2 mm oder weniger als 1,5 mm aufweisen. Hierbei kann es sich insbesondere um einen minimalen Abstand handeln. Der minimale Abstand kann von der Rotationsstellung der Welle bzw. Walze abhängen. In diesem Fall kann es sich bei dem angegebenen Abstand insbesondere um den minimalen Abstand handeln, der im Rahmen der Rotation der Walze auftritt. Wie später noch erläutert werden wird, kann es zur Wasseraufbereitung vorteilhaft sein, möglichst geringe Abstände zwischen der Mantelfläche und dem Boden der Auffangwanne zu nutzen. Es ist beispielsweise möglich, dass der Abstand zwischen 1 mm und 1,2 mm oder sogar unterhalb von 1 mm liegt. Beispielsweise kann der Abstand kleiner als 0,5 mm oder kleiner als 0,3 mm sein. Vorzugsweise ist der Abstand so gewählt, dass ein mechanischer Kontakt zwischen Mantelfläche und Boden der Auffangwanne im Betrieb der Walzenbaugruppe vermieden wird, da dieser zu einer Abnutzung der Komponenten und unter Umständen zu einer Verunreinigung des Wassers führen würde. Die untere Grenze für den Abstand hängt somit von zu erwartenden Toleranzen und von der Steifigkeit des die äußere Mantelfläche bildenden Gitters ab.

Zur Aufbereitung von Wasser sollen bestimmte Reaktionen bzw. Wechselwirkungen für Fremdstoffe im Wasser gezielt herbeigeführt werden, also beispielsweise eine Wechselwirkung zwischen Fremdstoff und Tensid ermöglicht werden oder eine Oxidation oder Hydration des Fremdstoffs ermöglicht werden. Diese Wechselwirkungen können durch eine Hydrathülle um den jeweiligen Fremdstoff behindert sein. Entsprechende Hydrathüllen können sich aufgrund der starken Polarität von Wassermolekülen clusterartig um Ionen bzw. polare Moleküle bilden. Auch nicht oder wenig polare Moleküle können jedoch von einer Hydrathülle umgeben sein. So ist beispielsweise der Effekt der wassermeidenden Hydration bekannt, bei der alleine das Vorhandensein von nicht oder wenig polaren Molekülen die Bewegungsfreiheit des umgebenden Wassers einschränkt und somit zur Bildung von Strukturen mit einer gewissen Stabilität im umgebenden Wasser führen kann.

Durch einen geringen minimalen Abstand zwischen der äußeren Mantelfläche und dem Boden der Auffangwanne und der Ausbildung der Mantelfläche als Gitter wird Wasser durch die Rotation der Walze in diese Engstelle geführt und wird zunächst durch die Reduzierung des Abstands mit starkem Druck beaufschlag und anschließend rasch entspannt. Dies sowie die im Bereich der Engstelle auftretenden Scherkräfte können dazu führen, dass Hydrathüllen von Kolloiden oder anderen Fremdstoffen aufgebrochen werden, so dass diese beispielsweise oxidiert, hydriert oder an Tenside gebunden werden können.

Die die Walzenbaugruppe umfassende Oxidationsstufe kann einen Wasserbehälter umfassen, dem das Wasser über einen Behälterzulauf zugeführt wird und aus dem das Wasser durch einen Behälterablauf abgeführt wird, wobei das Wasser über eine Ansaugöffnung des Wasserbehälters, insbesondere durch eine Pumpe, angesaugt und der jeweiligen Wasserzuführung der jeweiligen Walze zugeführt wird, wobei ein Wasserabfluss der Walzenbaugruppe, dem über eine Seitenwand wenigstens einer der Auffangwannen tretendes Wasser zugeführt wird, in den Wasserbehälter mündet.

Somit kann der Walzenbaugruppe beziehungsweise den einzelnen Walzen Wasser über die Ansaugöffnung aus dem Wasserbehälter zugeführt werden und nach einer Aufbereitung durch die Walze oder Walzen kann das Wasser über den Wasserabfluss zurück in den Wasserbehälter geführt werden. Dies ermöglicht es insbesondere, dass zumindest ein Teil des im Wasserbehälter befindlichen Wassers die Walzenbaugruppe mehrfach durchläuft, womit eine bessere Aufreinigung erreicht werden kann.

Über den Behälterzulauf kann insbesondere über ein bestimmtes Zeitintervall kontinuierlich Wasser zugeführt werden und über den Behälterablauf in diesem Zeitintervall im Wesentlichen die gleiche Menge Wasser abgeführt werden. Insbesondere kann der Wasserbehälter in einem Strömungspfad zwischen zwei obig erläuterten Pufferbehältern liegen, so dass zum Ende des Zeitintervalls, in dem das Wasser in dem ersten dieser Pufferbehälter verbleibt, das Wasser beispielsweise durch Öffnen eines Ventils beziehungsweise durch Betrieb einer Pumpe, durch den Wasserbehälter hindurchgeführt wird, um den zweiten Pufferbehälter zu erreichen. Durch eine geeignete Führung des Wassers im Wasserbehälter kann insbesondere erreicht werden, dass das Wasser hierbei typischerweise die Walzenbaugruppe wenigstens einmal, insbesondere mehrfach, durchläuft. Durch die Rückführung des Wassers von der Walzenbaugruppe in den Wasserbehälter würde, wenn zunächst angenommen wird, dass über den Behälterzulauf kein weiteres Wasser zu- und über den Behälterablauf kein Wasser abgeführt wird, die Konzentration von Fremdstoffen, für die noch eine Aufarbeitung in der Walzenbaugruppe gewünscht ist, kontinuierlich sinken, da jeweils ein Teil dieser Fremdstoffe gemeinsam mit dem Wasser zur Walzenbaugruppe geführt wird und dort zum Teil verarbeitet wird. Durch Abstimmung der Wassermenge, die über den Behälterzulauf zugeführt und über den Behälterablauf abgeführt wird, auf die über die Ansaugöffnung zur Walzenbaugruppe geführte Wassermenge pro Zeit kann somit eingestellt werden, welche verbleibende Menge von Fremdstoffen in dem über den Behälterablauf abgeführten Wasser toleriert werden soll.

Um eine Durchmischung des von der Walzengruppe rückströmenden Wassers und des neu zugeführten Wassers zu verbessern, kann der Wasserbehälter eine Umlenkplatte aufweisen, die in den Wasserbehälter hineinragt und frei in dem Wasserbehälter endet. Der Behälterzulauf und der Wasserabfluss der Walzenbaugruppe können auf einer Seite der Umlenkplatte angeordnet sein und der Behälterablauf und/oder die Ansaugöffnung können auf der gegenüberliegenden Seite der Umlenkplatte angeordnet sein.

In einem Gehäuse der Walzenbaugruppe kann wenigstens eine Gaszuführleitung münden, die durch eine Gasabführöffnung an der Oberseite des Wasserbehälters gespeist ist. An der Gasabführöffnung kann insbesondere ein Schaumzerleger angeordnet sein. Dies kann vorteilhaft sein, da sich durch den Betrieb der Walzenbaugruppe Schaum auf der Wasseroberfläche bilden kann. Dieser Schaumüberschuss würde dann von dem Schaumzerleger zerlegt.

Wie bereits obig erläutert, kann in den Oxidationsstufen eine Elektrolyse des Wassers erfolgen, insbesondere auch in dem Wasserbehälter. Dies führt unter anderem dazu, dass die Luft oberhalb der Wasseroberfläche im Wasserbehälter eine hohe Sauerstoff- und Ozonkonzentration aufweist. Durch wenigstens eine Gaszuführleitung kann erreicht werden, dass diese sauerstoff- beziehungsweise ozonreiche Luft besonders gut in den Bereich der Walzenbaugruppe strömen kann beziehungsweise beispielsweise durch einen Ventilator oder Ähnliches gezielt dort hin gefördert wird. Da dort jedoch aufgrund der Schaumbildung eine sehr große Wasseroberfläche resultiert, können Fremdstoffe somit gut durch den zugeführten Sauerstoff beziehungsweise das zugeführte Ozon oxidiert werden.

Vorzugsweise werden in dem erfindungsgemäßen Verfahren wenigstens zwei oder wenigstens drei der Oxidationsstufen und/oder wenigstens zwei der Trennstufen und/oder wenigstens zwei der Pressstufen verwendet, durch die das Wasser jeweils sequentiell durch die Fördereinrichtung geführt wird. Als Pressstufen können beispielsweise wie obig erläutert eine Grob- und eine Feinpresse genutzt werden. Die Oxidationsstufen beziehungsweise Trennstufen können jeweils einen obig erläuterten Pufferbehälter umfassen, so dass zumindest ein Großteil des Wassers am Ende des Zeitintervalls, für das es in dem jeweiligen Pufferbehälter aufgenommen ist, zum nächsten der Pufferbehälter geführt wird.

In wenigstens einer der Oxidationsstufen, insbesondere in der letzten Oxidationsstufe, kann dem Pufferbehälter der obig erläuterte Wasserbehälter mit der daran angeordneten Walzenbaugruppe nachgeschaltet sein, so dass der Pufferbehälter und der Wasserbehälter gemeinsam die letzte Oxidationsstufe bilden. Im Rahmen der Entwicklung des erfindungsgemäßen Verfahrens beziehungsweise der Vorrichtung, die das erfindungsgemäße Verfahren durchführt, wurde erkannt, dass durch mehrere sequentiell durchlaufende Press-, Oxidations- beziehungsweise Trennstufen bei gleichem Bauraum- und Energieverbrauch ein höherer Durchsatz erreicht werden kann, als wenn stattdessen beispielsweise größervolumige jeweilige Stufen genutzt würden.

Ein Teil des Wassers aus wenigstens einer der Oxidationsstufen kann in eine vorangehend durchlaufene Oxidationsstufe zurückgeführt werden. Insbesondere kann diese für eine letzte Oxidationsstufe gelten, die die Walzenbaugruppe umfasst. Insbesondere kann hierbei ein Bodensatz zurückgeführt werden, der ausgefallene Fremdstoffe umfasst. Wie obig erläutert, ist in den Oxidationsstufen potentiell bereits Trennmittel im Wasser vorhanden, so dass beispielsweise Oxidationsprodukte von Fremdstoffen auch in Oxidationsstufen ausfallen können. Zudem können beispielsweise Metallhydride ausfallen, deren Metalle aus der Oxidation von metallorganischen Verbindungen resultieren. Die ausfallenden Teilchen sind jedoch sehr klein, so dass einerseits eine Abtrennung über die Pressstufen als Feststoff kaum möglich ist. Andererseits können diese Teilchen durch die Rückführung in eine vorangehende Oxidationsstufe dazu dienen, eine weitere Flockung durchzuführen und somit größere Flocken zu erhalten und zugleich den Materialeinsatz weiter zu reduzieren.

Bei Erfüllung einer, insbesondere von der Wasserqualität am Ablauf abhängigen, Auslösebedingung kann der Zulauf zu einem Pufferbehälter gesperrt werden und stattdessen kann Wasser aus einem Wasservorrat verarbeitet werden. Der Pufferbehälter kann im Fluidpfad von dem Zulauf zu dem Ablauf vor der Oxidationsstufe angeordnet sein, insbesondere zwischen zwei Pressstufen, speziell zwischen einer Grobpresse und einer Feinpresse, z.B. der obig beschriebenen Filterpresse. Der Wasservorrat kann insbesondere vorangehend durch Wasser befüllt werden, das die Trennstufe beziehungsweise Trennstufen und insbesondere den Feinfilter durchlaufen hat. Anders ausgedrückt wird während des normalen Betriebs der Wasservorrat mit aufbereitetem Wasser befüllt, so dass dieses bei Erfüllung der Auslösebedingung zur Verarbeitung bereitsteht.

Die Auslösebedingung kann beispielsweise dann erfüllt sein, wenn der chemische Sauerstoffbedarf (CSB) am Ablauf einen Grenzwert überschreitet. Dies deutet darauf hin, dass keine hinreichend gute Aufbereitung des Wassers erfolgt ist, da im Wasser eine größere Menge von oxidierbaren Stoffen verbleibt. Dies kann unter Umständen daraus resultieren, dass sich Verschmutzungen in der Vorrichtung abgelagert haben. Diese können durch einen Betrieb mit bereits aufbereitetem Wasser für einen oder mehrere Zyklen typischerweise wieder entfernt werden, so dass, abgesehen von einer kurzen Unterbrechung des Aufbereitungsbetriebs bei Erfüllung der Auslösebedingung, typischerweise keine aufwendige Wartung erforderlich ist.

Die Wirksamkeit des erläuterten Verfahrens soll im Folgenden kurz anhand einiger Informationen zu einem genutzten Prototyp dargestellt werden. Alle Komponenten des Prototyps sind in zwei 40-Fuß ISO-Containern aufgenommen. Trotz dieser relativ kompakten Abmessungen und einem Energieverbrauch von nur ca. 10 kW können bei der relativ aufwendigen Aufreinigung von Gärresten einer Biogasanlage ca. 18.000 Tonnen Gärreste pro Jahr aufgearbeitet werden, wobei über 12.000 Tonnen Klarwasser resultieren. Im Feststoff (ca. 6000 t) bleiben der Stickstoff, Phosphor und alle Nährstoffverbindungen erhalten. Insgesamt wird somit eine sehr gute Wasseraufbereitung mit hohem Durchsatz bei relativ geringem Bauraum und Energieverbrauch erreicht.

Neben dem erfindungsgemäßen Verfahren betrifft die Erfindung eine Vorrichtung zur Wasseraufbereitung, umfassend einen Zulauf zur Zuführung von aufzubereitendem Wasser, einen Ablauf zur Abfuhr von aufbereitetem Wasser und eine Fördereinrichtung zur Förderung des Wassers von dem Zulauf zu dem Ablauf, wobei das Wasser durch mehrere Aufbereitungsstufen geführt wird, wobei wenigstens eine der Aufbereitungsstufen eine Oxidationsstufe zur Oxidation von im Wasser befindlichen Fremdstoffen durch ein dem Wasser in oder vor der Oxidationsstufe beigesetztes Oxidationsmittel ist und wenigstens eine der Aufbereitungsstufen, der das Wasser nach der Verarbeitung durch die Oxidationsstufe zugeführt wird, eine Trennstufe zur Ausfällung von nach der Oxidationsstufe im Wasser befindlichen Fremdstoffen ist, wobei eine Steuereinrichtung der Vorrichtung zur Steuerung der Fördereinrichtung und der Aufbereitungsstufen eingerichtet ist. Die Vorrichtung kann zur Durchführung des erfindungsgemäßen Verfahrens zur Wasseraufbereitung eingerichtet sein. Insbesondere kann die Steuereinrichtung dazu eingerichtet sein, die Fördereinrichtung und die Aufbereitungsstufen zur Durchführung des erfindungsgemäßen Verfahrens anzusteuern. Allgemein können zum erfindungsgemäßen Verfahren genannte Merkmale auf die erfindungsgemäße Vorrichtung zur Wasseraufbereitung übertragen werden und umgekehrt.

Weitere Vorteile und Einzelheiten der Erfindung ergeben sich aus den folgenden Ausführungsbeispielen sowie den zugehörigen Zeichnungen. Hierbei zeigen schematisch:
- Fig. 1: ein Ausführungsbeispiel einer erfindungsgemäßen Vorrichtung zur Wasseraufbereitung, durch die ein Ausführungsbeispiel des erfindungsgemäßen Verfahrens implementiert wird, und
- Figuren 2 bis 4: Detailansichten verschiedener Komponenten der in Fig. 1 gezeigten Vorrichtung.

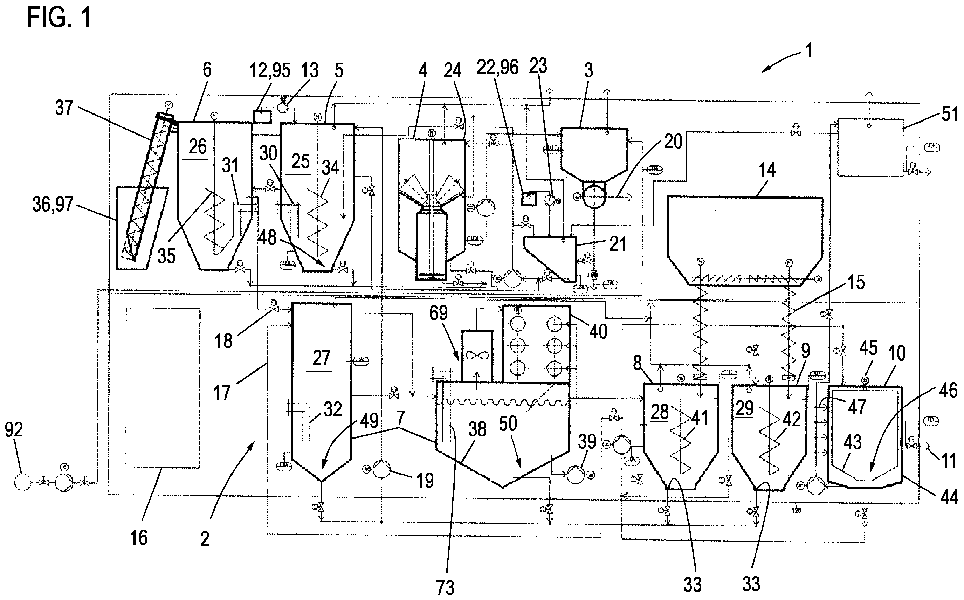

Fig. 1 zeigt eine Vorrichtung zur Wasseraufbereitung 1, die einen Zulauf 92 zur Zuführung von aufzubereitendem Wasser, einen Ablauf 11 zur Abfuhr von aufbereitetem Wasser und eine Fördereinrichtung 2 zur Förderung des Wassers von dem Zulauf 92 zu dem Ablauf 11 umfasst, wobei das Wasser durch mehrere Aufbereitungsstufen geführt wird. Hierbei sind drei der Aufbereitungsstufen Oxidationsstufen 5, 6, 7, in denen im Wasser befindliche Fremdstoffe durch ein dem Wasser beigesetztes Oxidationsmittel 12 oxidiert wird. Das Oxidationsmittel 12 wird durch eine Dosiereinrichtung 13, im Beispiel eine Pumpe, aus einem Vorratsbehälter in der ersten Oxidationsstufe 5 in das Wasser eingebracht und verbleibt dort auch in den folgenden Oxidationsstufen 6, 7, so dass noch nicht aufgebrauchtes Oxidationsmittel auch in den weiteren Oxidationsstufen 6, 7 Fremdstoffe oxidieren kann.

Die zwei Aufbereitungsstufen sind Trennstufen 8, 9, denen das Wasser nach Durchlaufen der Oxidationsstufen 5, 6, 7 zugeführt wird. In den Trennstufen, 8, 9 wird dem Wasser aus einem Vorratsbehälter über eine jeweilige Dosiervorrichtung 15, im Beispiel über eine Förderschnecke, Trennmittel 14 zugeführt, das beispielsweise eine Mischung aus Flockungsmittel und Aktivkohle sein kann. Dies führt dazu, dass im Wasser befindliche Fremdstoffe aufgrund des Flockungsmittels ausflocken beziehungsweise an die Aktivkohle angebunden werden.

Hierbei tritt üblicherweise das Problem auf, dass hohe Konzentrationen von großen organischen Molekülen eine derartige physikalische Trennung mithilfe von Trennmitteln 14 stark hemmen können, so dass in den Trennstufen 8, 9 eine lange Standzeit und ein hoher Materialeinsatz erforderlich wären. Dies wird in der Vorrichtung 1 beziehungsweise im erläuterten Verfahren dadurch vermieden, dass durch die vorangehend durchlaufenen Oxidationsstufen 5, 6, 7 entsprechende Moleküle bereits oxidiert oder auf andere Weise zerstört wurden, so dass in den Trennstufen 8, 9 primär gut ausfällbare, relativ kleine Moleküle vorhanden sind. Die Fördereinrichtung 2 dient dazu, dass Wasser zwischen dem Zulauf 92, dem Ablauf 11 und den einzelnen Aufbereitungsstufen zu transportieren. Sie wird durch eine Vielzahl von Leitungsnetzabschnitten 17 gebildet, durch die entweder durch Pumpen 19 oder die Schwerkraft Wasser transportiert wird. Um einen Transport durch Schwerkraft zu unterdrücken bzw. freizugeben und/oder zur Wahl zwischen mehreren möglichen Förderpfaden sind zudem eine Vielzahl von Ventilen 18 vorgesehen.

Die Pumpen 19 und Ventile 18 werden ebenso wie die verschiedenen Aufbereitungsstufen durch eine Steuereinrichtung 16 der Vorrichtung 1 gesteuert, die nur schematisch dargestellt ist. Die Steuerung kann beispielsweise mithilfe eines oder mehrerer Microcontroller implementiert sein oder Ähnliches. Die Bereitstellung von Steuersignalen und der Empfang von Sensorsignalen kann unmittelbar digital erfolgen oder über entsprechende Wandler.

Sind im zugeführten Wasser relativ große Fremdstoffe vorhanden, beispielsweise lange Fasern, wie sie in Gülle, Gärresten aus Biogasanlagen oder Ähnlichem auftreten, ist es vorteilhaft, vor den Oxidationsstufen 5, 6, 7 wenigstens eine Pressstufe 3, 4 als weitere Aufbereitungsstufe zu nutzen, um Fest- und Faserstoffe abzutrennen.

Im gezeigten Ausführungsbeispiel wird als eine erste Pressstufe 3 eine Grobpresse genutzt, die beispielsweise zugeführtes Material über eine Schnecke gegen ein Sieb pressen kann, um anschließend das Presswasser weiter zu verarbeiten. Die Feststoffe werden hierbei, wie durch den Pfeil 20 angedeutet ist, aus der Vorrichtung 1 herausgeführt beziehungsweise dort bis zu einer Entnahme gelagert. Das Presswasser wird zunächst in einem Pufferbehälter 21 gesammelt, wobei in dem Pufferbehälter 21 über die Dosiervorrichtung 23 aus einem Vorratsbehälter 96 ein Tensid 22, insbesondere als Tensidlösung, zugesetzt wird.

Tenside 22 führen zunächst zu einer besseren Löslichkeit von organischen oder anderen wenig polaren Molekülen in Wasser, so dass eine Beisetzung von Tensiden 22 zur Verbesserung einer Ausfällung von Fremdstoffen zunächst kontraintuitiv erscheint. Es wurde jedoch erkannt, dass durch Beisetzung von Tensiden tendenziell eine Vereinzelung von Fremdstoffen erreicht wird, wodurch Reaktionen, also insbesondere eine Oxidation oder Hydrolyse dieser Moleküle, um sie in kleinere Molekülreste aufzuteilen, erheblich schneller ablaufen können als in Fällen, in denen kolloide insbesondere hydrophober Moleküle clusterartig als Schwebteilchen vorliegen oder Ähnliches.

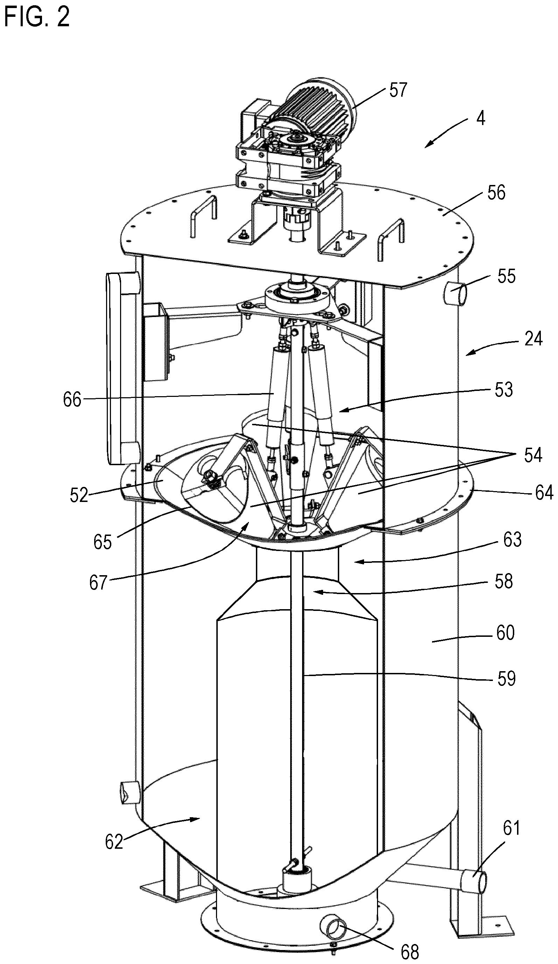

Aus dem Pufferbehälter 21 wird das mit Tensiden 22 versetzte Wasser in das Gehäuse 24 einer zweiten Pressstufe 4 geführt, die später noch im Detail mit Bezug auf Fig. 2 erläutert werden wird. Diese kann eine Filterung von Teilchen bis zu einer Größe von zwischen 1 µm und 50 µm vorzugsweise bis zu einer Größe von zwischen 1 µm und 25 µm ermöglichen. Durch die später noch erläuterte Ausgestaltung kann dennoch auch bei stark mit Schwebstoffen belastetem Wasser eine Zusetzung des Filters vermieden werden.

Das durch beide Pressstufen 3, 4 gereinigte Wasser wird, im Beispiel über die gleiche Pumpe die bereits zur Führung des Wassers zur zweiten Pressstufe 4 genutzt wurde, in den Pufferbehälter 25 der ersten Oxidationsstufe 5 geführt. Dort wird, wie obig erläutert, aus dem Behälter 95 Oxidationsmittel 12 zugesetzt. Das Wasser verbleibt für ein gewisses durch die Steuereinrichtung 16 vorgegebenes Zeitintervall in dem Pufferbehälter 25, wobei für einen Teil dieses Zeitintervalls das Rührwerk 34 betrieben wird, um Reaktionen im Wasser zu beschleunigen.

Zusätzlich zu der Beisetzung von Oxidationsmittel 12 erfolgt eine Zersetzung von insbesondere organischen Molekülen auch dadurch, dass durch eine Elektrolyseeinrichtung 30, von der in Fig. 1 nur schematisch die Elektroden dargestellt sind, eine Elektrolyse des Wassers im Pufferbehälter 25 erfolgt. Hierdurch steigen der Ozon- und Sauerstoffgehalt des Wassers beziehungsweise der umgebenden Luft, was bereits zur Oxidation von Fremdstoffen beiträgt. Zudem resultieren zumindest im unmittelbaren Umfeld der Elektroden erhöhte OH⁻ - beziehungsweise H₃O⁺-Konzentrationen, wodurch die Hydrolyse von Fremdstoffen beschleunigt werden kann, da für diese keine Aktivierungsenergie zur Zerlegung von Wassermolekülen erforderlich ist.

Neben dem von der Pressstufe 4 zugeführten Wasser wird der Oxidationsstufe 5 auch Wasser aus den Trennstufen 8, 9 zugeführt. Da dieses Wasser über Ansaugöffnungen 33, die am oder nahe am Boden des jeweiligen Pufferbehälters 28, 29 angeordnet sind, abgesaugt wird, umfasst es eine hohe Konzentration von in der Trennstufe ausgefällten Fremdstoffen und des oder der Trennmittel, an das oder die die Fremdstoffe angelagert sind. Hieraus resultieren mehrere Vorteile. Zum einen wird hierdurch bereits in die erste Oxidationsstufe 5 zusätzlich Trennmittel eingebracht, so dass bereits in der Oxidationsstufe 5 Fremdstoffe, die an entsprechende Trennmittel gebunden werden, ausfallen können und über die Absaugöffnung 48 in Bodennähe des Pufferbehälters 25 abgesaugt werden können. Hierzu wird das Rührwerk 34 für einen Teil des Zeitintervalls, für das das Wasser in dem Pufferbehälter 25 verbleibt, deaktiviert. Beispielsweise kann das Rührwerk 34 10 Sekunden aktiv sein und anschließend 30 Sekunden stehen bleiben, um eine Sedimentierung von an Trennmittel 14 gebundenen Fremdstoffe zu ermöglichen. Durch die mehrfache Verwendung des beziehungsweise der Trennmittel 14 wird einerseits der erforderliche Materialeinsatz reduziert. Andererseits resultieren beispielsweise durch die Flockung einerseits in einer jeweiligen Trennstufe 8, 9 und andererseits in der Oxidationsstufe 5 relativ große Flocken, die durch die Pressstufe 3 gut abgetrennt werden können.

Das Wasser wird anschließend durch die Fördereinrichtung 2 in den Pufferbehälter 26 der zweiten Oxidationsstufe 6 geführt. Dort erfolgt ebenfalls durch die Elektrolyseeinrichtung 31 eine Elektrolyse des Wassers. Das Rührwerk 35 wird wie das Rührwerk 34 zeitversetzt betrieben. Somit laufen in der zweiten Oxidationsstufe 6 im Wesentlichen die gleichen Vorgänge wie in der Oxidationsstufe 5 ab. Durch die Zugabe von Aktivkohle und Flockungsmittel aus dem Vorratsbehälter 97 mittels der, im Beispiel als Zuführschnecke ausgebildeten, Dosiereinrichtung 37 kann der CSB-Wert des Wassers beeinflusst und gesteuert werden, wobei die Konzentration an Fremdstoffen, insbesondere an noch zu oxidierenden Fremdstoffen, durch die Vorverarbeitung in der ersten Oxidationsstufe 5 bereits reduziert ist. Bei ausreichender Zugabe von Oxidationsmitteln 12 aus dem Behälter 95 in der ersten Oxidationsstufe 5 liegt noch ausreichend unverbrauchtes Oxidationsmittel 12 vor, so dass keine zusätzliche Oxidationsmittelzugabe erforderlich ist.

Durch den an der Elektrolyseeinrichtung 31 fließenden Strom können Informationen über den Salzgehalt des Wassers im Pufferbehälter 26 gewonnen werden. In Abhängigkeit dieses Salzgehalts beziehungsweise des Stroms kann eine Dosiereinrichtung 37, im Beispiel eine Förderschnecke, durch die Steuereinrichtung 16 angesteuert werden, um weiteres Trennmittel 36 aus einem Vorratsbehälter 97 in das Wasser in dem Pufferbehälter 26 einzubringen.

Die dritte Oxidationsstufe 7 ist hingegen etwas anders aufgebaut. Dort wird ebenfalls ein Pufferbehälter 27 genutzt, in dem das Wasser für ein bestimmtes Zeitintervall verbleibt, um die Wasseraufbereitung in dieser Oxidationsstufe 7 an die getaktete Wasserdurchführung der anderen Aufbereitungsstufen anzupassen. Zudem erfolgt wie obig erläutert auch im Pufferbehälter 27 eine Elektrolyse durch die Elektrolyseeinrichtung 32 um die erläuterten Vorteile zu erreichen.

Der Pufferbehälter 27 wird jedoch vorbereitend mit Wasser aufgefüllt, das über eine bodenseitige Öffnung 46 eines Feinfilters 43 entnommen wird, der zwischen den Trennstufen 8, 9 und dem Ablauf 11 angeordnet ist. Anders ausgedrückt wird Wasser zur Vorfüllung des Pufferbehälters 27 genutzt, das eine geringe Konzentration von noch nicht aufgearbeiteten Fremdstoffen enthält. Es hat sich herausgestellt, dass für die folgende Wasseraufbereitung über die Walzengruppe 40 vorzugsweise bereits eingangsseitig relativ geringe Konzentrationen von aufzuarbeitenden Fremdstoffen genutzt werden sollten.

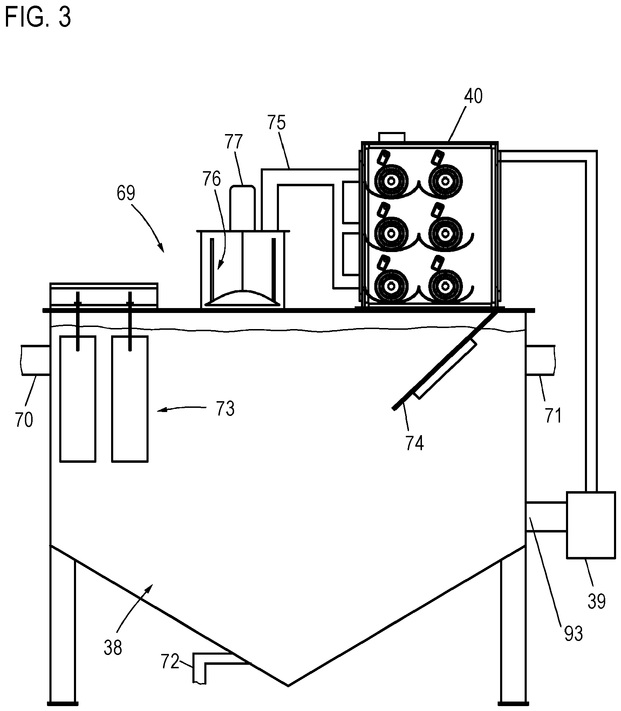

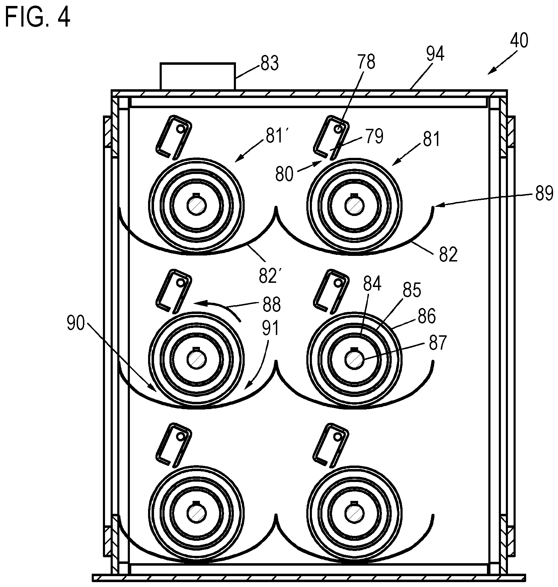

Im Strömungspfad zwischen dem Pufferbehälter 27 und dem Pufferfilter 28 der ersten Trennstufe 8 ist als Teil der dritten Oxidationsstufe 7 eine Teilstufe 69 angeordnet, die später noch im Detail mit Bezug auf die Figuren 3 und 4 erläutert werden wird. Diese dient allgemein dazu, in einer Walzenbaugruppe 40 große Wasseroberflächen zu erzeugen und hierdurch, insbesondere in Verbindung mit den beigesetzten Tensiden, eine gute Molekülvereinzelung und somit sehr gute Reaktionsgeschwindigkeiten zu erreichen.

Da das Wasser wie obig erläutert aufgrund der Rückführung eines Teils des Wassers aus den Trennstufen 8, 9 in die Oxidationsstufe 5 auch in den Oxidationsstufen 5, 6, 7 und somit auch in der Teilstufe 69 Trennmittel 14 enthält und zudem bestimmte Reste von Fremdstoffen nach einer Oxidation bereits von sich aus ausfallen, beispielsweise Hydroxide von Metallen, die bei einer Oxidation von metallorganischen Verbindungen resultieren, sind bodenseitig am Pufferbehälter 27 beziehungsweise am Wasserbehälter 38 der Teilstufe 69 Absaugöffnungen 49, 50 angeordnet, über die Wasser, das eine hohe Konzentration dieser ausgefallenen Fremdstoffe umfasst, zurück zur ersten Oxidationsstufe 5 geführt werden kann, wodurch, wie obig erläutert, größere Flocken resultieren können, die beispielsweise in der Pressstufe 3 abgesondert werden können.

Nach dem Durchströmen der Teilstufe 69 wird das Wasser wiederum in dem Pufferbehälter 28 gesammelt, der Teil der Trennstufe 8 ist, in der aus dem Vorratsbehälter wie obig erläutert zusätzliches Trennmittel 14 zugeführt wird. Hierdurch resultiert dort eine hohe Trennmittelkonzentration und nach einem kurzen Betrieb des Rührwerks 41 kann dieses angehalten werden, um ein rasches Ausfallen der an das oder die Trennmittel 14 gebundenen Fremdstoffe zu erreichen.

Das gleiche Vorgehen wird anschließend in einer weiteren Trennstufe 9 im Pufferbehälter 29 wiederholt, die das Rührwerk 42 aufweist. Da die vorangehend genutzten Oxidationsstufen 5, 6, 7 große organische Moleküle bereits oxidiert beziehungsweise anderweitig zerstört haben, verbleiben für Fällung keine Hindernisse, so dass auch mit kurzen Standzeiten von beispielsweise 30 Sekunden eine weitgehend vollständige Ausfällung der Fremdstoffe erreicht werden kann.

Um die wenigen verbleibenden, relativ kleinen und somit nicht notwendigerweise abgesackten Fremdstoffflocken und Aktivkohlepartikel zurückzuhalten, wird das Wasser nach Durchlaufen der Trennstufen 8, 9 in einen becherförmigen Feinfilter 43 geleitet, der die letzte Aufbereitungsstufe 10 bildet und durch einen Motor 45 drehbar in einem Feinfilterbehälter 44 gelagert ist. Dieser kann beispielsweise eine Porengröße von 25 µm aufweisen, wobei auch erheblich kleinere Porengrößen von beispielsweise 1 µm genutzt werden können. Durch die Becherform des Feinfilters 43 resultiert eine relativ große Filterfläche, wobei durch die Rotation des Feinfilters 43 abwechselnd verschiedene Teile dieser Filteroberfläche primär am Filterprozess mitwirken, so dass ein Zusetzen der Filterfläche erheblich länger dauert als bei einem statischen Filter.

Da ein solches Zusetzen dennoch nicht vollständig vermieden werden kann, wird nach jedem Zyklus der Verarbeitung oder nach einer bestimmten Zahl von Zyklen oder Ähnlichem eine Spülung des Feinfilters 43 durchgeführt. Hierzu wird zunächst das Reinwasser aus dem Filterbehälter 44 über den Ablauf 11 entnommen und zumindest ein Großteil des im Feinfilters 43 verbleibenden Wassers über die Öffnung 46 abgesaugt und, wie bereits obig erläutert, genutzt, um den Pufferbehälter 27 vollzufüllen. Hierdurch liegt die Seitenwand des Feinfilters 43 im Wesentlichen vollständig frei. Durch seitliche Öffnungen 47 kann der Feinfilter 43 anschließend durch eine Pumpe durch aus dem Feinfilterbehälter 44 entnommenes Wasser beschickt werden, um den Feinfilter zu spülen. Hierbei rotiert der Feinfilter 43 vorzugsweise, um eine Reinigung im Wesentlichen der gesamten Oberfläche des Feinfilters 43 zu erreichen. Da das Wasser beim Spülen den Feinfilter 43 in die umgekehrte Richtung durchsetzt, wie bei der Filterung, können die Filterporen zuverlässig wieder geöffnet werden.

Über längere Betriebszeiten der Vorrichtung 1 können sich an einigen Komponenten der Vorrichtung 1 Ablagerungen bilden, die dazu führen, dass zunehmend größere Anteile der Fremdstoffe oder von Abbauprodukten der Fremdstoffe den Ablauf erreichen. Es kann somit zweckmäßig sein, periodisch oder dauerhaft die Wasserqualität am Ablauf 11 zu überwachen, wobei es ausreichend sein kann, Stichproben in relativ großen Zeitabständen zu entnehmen. Wird eine unbefriedigende Wasserqualität festgestellt und überschreitet beispielsweise der CSB-Wert einen Grenzwert, wäre es prinzipiell möglich, eine Wartung der gesamten Vorrichtung 1 durchzuführen.

Es wurde jedoch erkannt, dass es in vielen Fällen ausreichend ist, die Vorrichtung 1 für einen oder mehrere Zyklen mit relativ klarem Wasser statt beispielsweise mit Gülle oder Gärabfällen zu betreiben, um bei anschließend erneutem Betrieb mit diesen Eingangsstoffen erheblich verbesserte Wasserqualitäten am Ablauf 11 zu erreichen. Daher kann insbesondere automatisiert durch die Steuereinrichtung 16 bei Erfüllung einer Auslösebedingung, beispielsweise bei Erfassung eines zu hohen CSB-Wertes, der Zulauf zu dem Pufferbehälter 21 gesperrt werden und stattdessen Wasser aus einem Wasservorrat 51 verarbeitet werden. Wie der Darstellung in Fig. 1 zu entnehmen ist, kann das Wasser in dem Wasservorrat 51 insbesondere im Rahmen des normalen Betriebs aus dem Feinfilterbehälter 44 entnommen werden, also den im normalen Betrieb über den Ablauf 11 entnommenen aufbereiteten Wasser entsprechen.

Durch den beschriebenen Aufbau der Vorrichtung 1 zur Wasseraufbereitung beziehungsweise das beschriebene Verfahren wird ein sehr kompakter Aufbau der Vorrichtung 1 erreicht. Beispielsweise können die gezeigten Komponenten in zwei gestapelten 40-Fuß-ISO-Containern angeordnet sein, wie schematisch durch die die Komponenten umgebenden Kästen in Fig. 1 dargestellt ist. Dies ermöglicht es, die Vorrichtung mit geringem Aufwand zu einem Aufstellungsort zu liefern und dort durch Verbinden einiger weniger Leitungen mit geringem Montageaufwand in Betrieb zu nehmen. Durch die Kombination von Oxidation und physikalischer Trennung, insbesondere in Verbindung mit vorangehenden Pressstufen und einer abschließenden Feinfilterung, können mit relativ geringem Energieaufwand von beispielsweise 10 kW und durch eine entsprechend kleinbauende Vorrichtung relativ hohe Durchsätze von beispielsweise 18.000 Tonnen Gülle pro Jahr erreicht werden. Durch die erläuterte mehrfache Umsetzung des Trennmittels und die Nutzung des Oxidationsmittels in mehreren Aufbereitungsstufen ist zudem ein sehr geringer Einsatz von Material erforderlich.

Fig. 2 zeigt weitere Details der als Pressstufe 4 in der Vorrichtung 1 genutzten Feinpresse. Hierbei zeigt die Figur eine aufgeschnittene Perspektivansicht. Die Aufbereitungsstufe 4 umfasst ein Gehäuse 24, in das das Wasser über einen Zulauf 55 eingeführt wird. In dem Gehäuse 24 wird eine Filtereinrichtung 52 und eine Presseinrichtung 53 angeordnet, die in dem gezeigten Beispiel drei Presselemente 54 aufweist. Nach oben ist das Gehäuse 24 über einen Deckel 56 abgeschlossen, auf dem ein Antriebsmotor 57 sitzt, der eine eine vertikale Achse 58 bildende Welle 59 antreibt, mit der die Presselemente 54 verbunden sind. Die Presselemente 54 rollen auf der Filtereinrichtung 52 ab und pressen das Wasser durch die Filtereinrichtung 52, während ein Großteil der Fremdstoffe, die eine gewisse Partikelgröße aufweisen, in der Filtereinrichtung 52 hängen bleiben. Das gereinigte Wasser sammelt sich in einem Sammelbehälter 60, der als Ringraum ausgeführt ist und der Filtereinrichtung 52 nachgeschaltet ist. Über einen Ablauf 61 kann das filtrierte Wasser abgezogen werden und der Oxidationsstufe 5 zugeführt werden.

Im Gehäuseinneren ist des Weiteren ein Sammelbehälter 62 vorgesehen, der einer mittigen Öffnung 63 der Filtereinrichtung 52 nachgeschaltet ist. In diesem Sammelbehälter 62 sammeln sich ausgepresste Filterkuchen an, die einerseits in der Filtereinrichtung 52 gebildet werden, indem die Presselemente 54 über die Filtereinrichtung 52 rollen, andererseits über diese aber auch aus den Durchbrechungen der Filtereinrichtung 52 wieder herausgesaugt werden, so dass sie sich, in der Flüssigkeit schwebend, im Sammelbehälter 62 sammeln können und aus diesem über die Absaugöffnung 68 abgesaugt werden können. Das über die Absaugöffnung 68 abgesaugte Wasser wird in der in Fig. 1 gezeigten Vorrichtung der ersten Pressstufe 3 zugeführt.

Die Filtereinrichtung 52 weist eine Kegelstumpf- beziehungsweise Trichterform auf und ist über den Ringflansch 64 gehäuseseitig verschraubt. Die Presselemente 54 sind kegelstumpfförmig ausgeführt, so dass sie auf der Filtereinrichtung 52 aufliegen. Jedes Presselement 54 umfasst einen hohlen Elementkörper 65, auf dem außenseitig ein Außenmantel 67 aus einem elastischen Material aufgebracht ist.

Die Filtereinrichtung 52 umfasst eine Filterplatte, die die obig bereits angesprochenen Durchbrechungen ausbildet, in die die Filterkuchen eingepresst werden. An der von den Presselementen 54 abgewandten Seite der Filterplatte ist ein Filtermittel, beispielsweise eine Lochfolie oder ein Flies, angeordnet, das sehr kleine Durchbrechungen, beispielsweise im Bereich zwischen 1 µm und 25 µm, aufweist. Das Filtermittel hält das Material des Filterkuchens zurück und lässt nur Wasser und sehr kleine Partikel passieren.

Durch das obig erläuterte Vorgehen, bei dem der Filterkuchen bei einem weiteren Abrollen der Presselemente 54 wieder aus den entsprechenden Durchbrechungen herausgezogen wird, kann erreicht werden, dass sich gegenüber üblichen Filtern, bei dem das Wasser durch ein Filtermittel gepresst wird, keine oder zumindest erheblich weniger Rückstände an der Filterfläche anlagern, wodurch die entsprechende Pressstufe 4 über längere Zeiträume ohne Wartung betrieben werden kann, auch wenn ein sehr feinporige Filtermittel genutzt wird.

Fig. 3 zeigt eine Detailansicht der Teilstufe 69 der in Fig. 1 gezeigten Oxidationsstufe 7. Diese umfasst einen Wasserbehälter 38, dem über einen Behälterzulauf 70 aufzuarbeitendes Wasser zugeführt wird. Nach der Aufbereitung wird das Wasser über den Behälterablauf 71 aus dem Wasserbehälter 38 abgeführt.

Das über den Behälterzulauf 70 einströmende Wasser passiert im Ausführungsbeispiel zunächst Elektroden einer Elektrolyseeinrichtung 73, die durch diese mit Spannung beaufschlagt werden. Die Elektrolyse des Wassers führt einerseits dazu, dass in der oberhalb der Wasseroberfläche befindlichen Luft ein hoher Sauerstoffanteil und auch ein merklicher Anteil von Ozon bzw. Sauerstoffradikalen vorliegt, der, wie später noch genauer erläutert werden wird, zur Zersetzung von Fremdstoffen in der Walzenbaugruppe 40 beitragen kann. Zudem wird zumindest lokal im Bereich der jeweiligen Elektrode eine höhere Konzentration an H3O+ bzw. OH--Radikalen erreicht, als sie ansonsten im Wasser vorliegen würde. Dies kann lokal zur Hydratisierung von Fremdstoffen beitragen, da es beispielsweise nicht mehr erforderlich ist, ein Wasserstoffatom von dem Wassermolekül abzutrennen, um eine OH- -Gruppe zur Hydratisierung eines Moleküls zu nutzen.

Resultiert aus der später noch erläuterten Umwälzung des Wassers über die Walzenbaugruppe 40 eine Strömungsgeschwindigkeit, die ausreichend hoch ist, können die erhöhten H3O+ bzw. OH- -Konzentrationen auch in der Walzenbaugruppe 40, vorliegen, da der Wassertransport schneller erfolgen kann als eine Neutralisierung von H3O+ und OH--Radikalen durch Diffusionsprozesse.

Eine Umlenkplatte 74 ist derart im Wasserbehälter 38 angeordnet, dass der Behälterzulauf 70 und ein Wasserabfluss der später noch erneut diskutierten Walzenbaugruppe 40 auf der gleichen Seite dieser Umlenkplatte 74 angeordnet sind, während der Behälterablauf 71 des Wasserbehälters 38 auf deren anderen Seite der Umlenkplatte 74 angeordnet ist. Dies führt dazu, dass über den Behälterzulauf 70 zugeführtes Wasser nicht unmittelbar zum Behälterablauf 71 strömen kann, sondern mit dem bereits in der Walzenbaugruppe 40 aufbereiteten Wasser durchmischt wird, wodurch die Konzentration von noch nicht aufgearbeiteten Fremdstoffen im Wasser deutlich reduziert wird.

Da das so durchmischte Wasser zudem auf seinem Strömungspfad zum Behälterablauf 71 an einer Ansaugöffnung 93 vorbeigeführt wird, über die es mit Hilfe der Pumpe 39 angesaugt und zur Walzenbaugruppe 40 gefördert wird, kann durch entsprechende Einstellung der Fördermenge der Pumpe 39 im Verhältnis zu der Wassermenge, die über den Behälterzulauf 70 zugeführt bzw. über den Behälterablauf 71 abgeführt wird, erreicht werden, dass zugeführtes Wasser im Mittel mehrfach durch die Walzenbaugruppe 40 geführt wird, bevor es über den Behälterablauf 71 abgeführt wird. Hierdurch kann für das Wasser im Wasserbehälter 38 und insbesondere für das Wasser, das über den Behälterablauf 71 abgeführt wird, eine sehr geringe Konzentration von nicht aufgearbeiteten Fremdstoffen erreicht werden.

Die Oxidationsstufe 7 bzw. die Teilstufe 69 dient primär dazu, Fremdstoffe im Wasser derart aufzuarbeiten, dass sie anschließend in den Trennstufen 8, 9 gut ausgefällt werden können. Dennoch können Teile der Fremdstoffe bereits in der Teilstufe 69 selbst ausfallen. Beispielsweise treten bei der Aufbereitung von Wasser, das aus fermentierter Gülle, beispielsweise aus einer Biogasanlage, rückgewonnen wurde, relativ hohe pH-Werte auf, sodass nach einem Aufbrechen von metallorganischen Verbindungen Hydroxide der Metalle in den meisten Fällen ausfallen. Zudem befindet sich, wie obig erläutert, auch in den Oxidationsstufen 5, 6, 7 bereits Trennmittel 14, 36 im Wasser. Somit kann sich im Wasserbehälter 38 ein Bodensatz mit ausgefallenen Fremdstoffen in hoher Konzentration bilden, der über eine bodennahe Abpumpöffnung 50 bzw. das Rohr 72 abgesaugt werden kann.

Um hohe Durchsätze bei relativ kompakten Abmessungen der Vorrichtung 1 einerseits und ein geringes Maß an im Wasser verbleibenden, nicht aufgearbeiteten Fremdstoffen andererseits zu erreichen, wird die Walzenbaugruppe 40 genutzt, um die Größe der Oberfläche des Wassers und allgemein die Dynamik von Reaktionen zur Aufbereitung zu erhöhen. Eine Detailansicht der Walzenbaugruppe 40 ist in Fig. 4 dargestellt. Die Walzenbaugruppe 40 umfasst im Beispiel sechs Walzen 81, 81', die durch ein Gehäuse 94 der Walzenbaugruppe 40 gelagert sind und durch einen gemeinsamen Antrieb 83 angetrieben werden. Der Antrieb 83 ist in Fig. 2 nur schematisch dargestellt. Beim Antrieb 83 kann es sich beispielsweise um einen Elektromotor handeln. Der Antrieb 83 kann beispielsweise unmittelbar mit der Welle 87 einer der Walzen 81, 81' gekoppelt sein. Die Wellen 87 der verschiedenen Walzen 81, 81' können untereinander bewegungsgekoppelt sein, beispielsweise durch Keilriemen.

Das über die Ansaugöffnung 93 durch die Pumpe 39 angesaugte Wasser wird zu jeweiligen Durchbrechungen 78 des Gehäuses 94 der Walzenbaugruppe 40 geführt, an die sich Wasserzuführungen 79 anschließen, die das einströmende Wasser axial entlang der Walze 81, 81' führen und durch einen Spalt 80 oder eine andere Öffnung auf eine äußere Mantelfläche 86 der jeweiligen Walze 81, 81' strömen lassen.

Die jeweiligen Walzen 81, 81 'umfassen, wie insbesondere in Fig. 4 zu erkennen ist, zwei in Radialrichtung voneinander beabstandete, zylinderförmige Mantelflächen 85, 86, die jeweils durch ein Gitter gebildet sind. Unterhalb der Walze 81, 81' ist eine jeweilige Auffangwanne 82, 82' angeordnet, die das über bzw. durch die Walze 81, 81' zugeführte Wasser auffängt. Hierbei sind die Abmessungen der Mantelflächen 85, 86 so gewählt, dass sie an der Unterseite der Walze 81, 81' in die Auffangwanne 82, 82' hineinragen. Radial innerhalb der inneren Mantelfläche 85 befindet sich zudem ein zylinderförmiger Innenmantel 84, der ebenfalls drehfest mit der Welle 87 verbunden ist. Die jeweilige Welle 87 und somit die Walzen 81, 81' werden, wie durch den Pfeil 88 angedeutet ist, mit einer relativ hohen Umdrehungszahl von beispielsweise 1000 U/min rotiert.

Die beschriebene Anordnung führt dazu, dass bei ausreichendem Füllgrad der Auffangwanne 82, 82' mit Wasser die beiden Mantelflächen 85, 86 in das Wasser eintauchen und es durch die Ausbildung der Mantelflächen 85, 86 als Gitter und die relativ schnelle Rotation der Walze 81, 81' stark verwirbeln und zumindest ein Stück weit mitnehmen. Somit resultiert in den Zwischenräumen zwischen den Mantelflächen 85, 86 bzw. zwischen dem Innenmantel 84 und der Mantelfläche 85, die beispielsweise eine Ausdehnung von 1 bis 1,5 cm in Radialrichtung aufweisen können, eine hochdynamische Wasserbewegung und eine Verwirbelung des Wassers. Dies führt einerseits zu einer Beschleunigung von Aufarbeitungsvorgängen innerhalb des Wassers, also beispielsweise von einer Hydratisierung von Fremdstoffen.

Andererseits wird, insbesondere da im Wasser Tenside 22 vorhanden sind, eine starke Schaumbildung resultieren, wobei die als Gitter ausgebildeten Mantelflächen 85, 86 jedoch gleichzeitig als mechanischer Schaumzerleger wirken, sodass der Schaum bzw. einzelne Luftblasen im Schaum eine sehr kurze Lebenszeit von beispielsweise nur ca. 2 ms aufweisen. Das Zusammenwirken der starken Schaumbildung mit der gleichzeitigen raschen Zerschlagung des Schaums führt dazu, dass kurzfristig sehr große Oberflächen bereitgestellt werden, jedoch gleichzeitig ein hoher Durchsatz erreicht werden kann.

Die Bildung großer Oberflächen führt einerseits dazu, dass Fremdstoffe im Wasser deutlich stärker mit zugeführter Luft, die wie obig erläutert insbesondere hohe Sauerstoff- bzw. Ozonanteile enthalten kann, wechselwirkend sind. Andererseits lagern sich im Wasser vorhandene Tenside 22 an dieser Oberfläche an und können somit eine große Filterfläche bilden, um an Fremdstoffe, beispielsweise organische Reste von oxidierten Molekülen bzw. Viren oder Bakterien, abzutöten.

Durch die Rotation der Walzen 81, 81' wird in der jeweiligen Auffangwanne 82, 82' befindliches Wasser in Fig. 4 tendenziell nach rechts beschleunigt, sodass für die Auffangwanne 82 das Wasser über die Seitenwand 89 der Auffangwanne 82 schwappt bzw. gefördert wird, wonach es vertikal durch den rechts der Auffangwannen 82 liegenden Hohlraum des Gehäuses 94 der Walzenbaugruppe 40, der den Wasserabfluss der Walzenbaugruppe 40 bildet, zurück in den Wasserbehälter 38 fallen kann, und zwar auf der linken Seite der Umlenkplatte 74. Hieraus resultiert die bereits obig erläuterte Vermischung mit frisch zugeführtem Wasser.

Wasser, das sich in der Auffangwanne 82' befindet, wird hierbei zunächst in die Auffangwanne 82 gefördert, da die Seitenwände 89 der Auffangwannen 82, 82' wasserdicht miteinander verbunden sind. Dies führt einerseits dazu, dass Wasser, das zunächst der Walzen 81' zugeführt wird, in der Walzenbaugruppe doppelt aufgearbeitet werden kann, nämlich einmal durch die Walze 81' und einmal durch die Walze 81. Zugleich führt dies dazu, dass das der Walze 81 zugeführte Wasser durch das von der Walze 81' zugeführte, vorverarbeitete Wasser verdünnt wird, sodass im Bereich der Walze 81 eine geringere Konzentration an noch nicht aufgearbeiteten Fremdstoffen vorliegt, als dies für die Walze 81' der Fall ist. Es wurde erkannt, dass diese Kombination zwischen einer seriellen und einer parallelen Aufarbeitung des Wassers besonders vorteilhaft ist.

Das Gitter, das die Mantelflächen 85, 86 bildet, kann so ausgebildet sein, dass eine Sägezahnstruktur der Walzenoberfläche resultiert. Diese führt in Verbindung mit einem geringen Abstand zwischen der äußeren Mantelfläche 86 und dem Boden der Auffangwanne 82, 82' insgesamt zu einem guten Aufbrechen von Hydrathüllen bzw. Wasserclustern, die eine Reaktion von Fremdstoffen im Wasser unterdrücken können. Das Wasser wird hierdurch im Bereich 90 zunächst stark komprimiert und anschließend im Bereich 91 plötzlich entspannt. Gemeinsam mit den in der Engstelle auftretenden Scherkräften können hierdurch Wassercluster aufgebrochen werden. Eine entsprechende Sägezahnstruktur für Gitter resultiert beispielsweise bei einer Herstellung eines rautenförmigen Gitters als Streckgitter.

Um einerseits die Schaumbildung innerhalb der Walzenbaugruppe weiter zu unterstützen und andererseits die aufgrund der Elektrolyse des Wassers auftretende hohe Sauerstoff- bzw. Ozonkonzentration auch im Bereich der Walzen 81, 81' zu erreichen, werden Gaszuführleitungen 75 genutzt, die durch eine Gasabführöffnung an der Oberseite des Wasserbehälters 38 gespeist werden. Da insbesondere der Betrieb der Walzenbaugruppe 40 dazu führen kann, dass sich auf der Oberfläche des Wassers im Wasserbehälter 38 eine Schaumschicht bildet und vorteilhaft verhindert werden soll, dass die Gasabführöffnung bzw. die Gaszuführleitungen 75 mit Schaum bedeckt werden, was eine Gaszufuhr zur Walzenbaugruppe 40 einschränken würde, ist im Bereich des Gasabführöffnung ein Schaumzerleger 76 angeordnet, der im Beispiel durch einen Elektromotor 77 angetrieben wird. Als Schaumzerleger 76 kann beispielsweise eine Scheibe mit darauf angebrachten Stäben dienen, wie sie schematisch in Fig. 3 dargestellt ist. Hierbei werden die Stäbe rasch durch den Schaum geführt und verbinden somit Luftblasen, was zur Auflösung des Schaums führt. Ergänzend oder alternativ können Prallbleche genutzt werden, an denen die Luftblasen platzen.

## Patentansprüche

1. Verfahren zur Wasseraufbereitung, wobei das aufzubereitende Wasser durch eine Fördereinrichtung (2) von einem Zulauf (92) über mehrere Aufbereitungsstufen zu einem Ablauf (11) geführt wird, wobei
- wenigstens eine der Aufbereitungsstufen eine Oxidationsstufe (5, 6, 7) ist, in der im Wasser befindliche Fremdstoffe durch ein dem Wasser in oder vor der Oxidationsstufe (5, 6, 7) beigesetztes Oxidationsmittel (12) oxidiert werden, und
- wenigstens eine der Aufbereitungsstufen, der das Wasser nach der Verarbeitung durch die wenigstens eine Oxidationsstufe (5, 6, 7) zugeführt wird, eine Trennstufe (8, 9) ist, in der nach Verarbeitung in der wenigstens einen Oxidationsstufe (5, 6, 7) im Wasser befindliche Fremdstoffe durch Beisetzung wenigstens eines Trennmittels (14, 36), insbesondere eines Flockungsmittels und/oder von Aktivkohle, ausgefällt und abgeschieden werden.

2. Verfahren nach Anspruch 1, **dadurch gekennzeichnet, dass** dem Wasser ein Tensid (22) beigemischt wird, insbesondere bevor es der Oxidationsstufe (5, 6, 7) oder den Oxidationsstufen (5, 6, 7) zugeführt wird.

3. Verfahren nach Anspruch 1 oder 2, **dadurch gekennzeichnet, dass** in der Oxidationsstufe (5, 6, 7) oder in wenigstens einer der Oxidationsstufen (5, 6, 7) und/oder in der Trennstufe (8, 9) oder in wenigstens einer der Trennstufen (8, 9) das Wasser für ein vorgegebenes Zeitintervall in einem jeweiligen Pufferbehälter (25 - 29) gehalten wird, bevor es durch die Fördereinrichtung (2) zu einer folgenden Aufbereitungsstufe geführt wird.

4. Verfahren nach Anspruch 3, **dadurch gekennzeichnet, dass** zumindest in einem der Pufferbehälter (25 - 29) ein Rührwerk (34, 35, 41, 42) angeordnet ist, das während eines Teils des Zeitintervalls betrieben wird und während eines Teils des Zeitintervalls ruht.

5. Verfahren nach einem der vorangehenden Ansprüche, **dadurch gekennzeichnet, dass** das Wasser nach der Trennstufe (8, 9) oder einer der Trennstufen (8, 9) und vor dem Ablauf (11) durch einen Feinfilter (43) mit einer Porengröße zwischen 50 µm und 0,5 µm oder zwischen 30 µm und 20 µm geführt wird.

6. Verfahren nach Anspruch 5, **dadurch gekennzeichnet, dass** als Feinfilter (43) ein becherförmiger Feinfilter (43) verwendet wird, der in einem Feinfilterbehälter (44) , insbesondere um eine Hochachse drehbar, angeordnet ist, wobei das Wasser von der Trennstufe (8, 9) oder von wenigstens einer der Trennstufen (8, 9) dem Feinfilter (43) über eine offene Oberseite des Feinfilters (43) zugeführt wird.

7. Verfahren nach Anspruch 6, **dadurch gekennzeichnet, dass** der Feinfilterbehälter (44) mehrere seitliche Öffnungen (47) aufweist, die durch eine Pumpe durch dem Feinfilterbehälter (44) entnommenes Wasser beschickt werden, um den Feinfilter (43) zu spülen.

8. Verfahren nach einem der vorangehenden Ansprüche, **dadurch gekennzeichnet,**
**dass** zum Ersten ein Teil des Wassers aus dem Feinfilterbehälter (44) oder aus dem Innenraum des Feinfilters (43) entnommen und der Oxidationsstufe (5, 6, 7) oder wenigstens einer der Oxidationsstufen (5, 6, 7) zugeführt wird, und/oder
**dass** zum Zweiten nach der Aufbereitung des Wassers in der Trennstufe (8, 9) oder wenigstens einer der Trennstufen (8, 9) ein Teil des Wassers, der eine erhöhte Konzentration an ausgefällten Fremdstoffen enthält, durch die Fördereinrichtung (2) zurück zu der Oxidationsstufe (5, 6, 7) oder zu einer der Oxidationsstufen (5, 6, 7) geführt wird, und/oder
**dass** zum Dritten ein Teil des Wassers aus wenigstens einer der Oxidationsstufen (5, 6, 7) in eine vorangehend durchlaufene Oxidationsstufe (5, 6, 7) zurückgeführt wird.

9. Verfahren nach einem der vorangehenden Ansprüche, **dadurch gekennzeichnet,**
**dass** zum Ersten in der Oxidationsstufe (5, 6, 7) oder in wenigstens einer der Oxidationsstufen (5, 6, 7) eine Elektrolyse des Wassers durch eine Elektrolyseeinrichtung (30 - 32, 73) erfolgt, und/oder dass zum Zweiten über eine Dosiereinrichtung (37) in der Oxidationsstufe (5, 6, 7) oder in wenigstens einer der Oxidationsstufen (5, 6, 7) dem Wasser zusätzliches Trennmittel (36) beigesetzt wird, und/oder dass zum Dritten wenigstens zwei oder wenigstens drei der Oxidationsstufen (5, 6, 7) und/oder wenigstens zwei der Trennstufen (8, 9) und/oder wenigstens zwei der Pressstufen (3, 4) verwendet werden, durch die das Wasser jeweils sequentiell durch die Fördereinrichtung (2) geführt wird.

10. Verfahren nach einem der vorangehenden Ansprüche, **dadurch gekennzeichnet, dass** wenigstens eine der Aufbereitungsstufen eine Pressstufe (3, 4) ist, in der eine Presseinrichtung (53) verwendet wird, um das Wasser durch eine Filtereinrichtung (52) hindurchzupressen, bevor es der Oxidationsstufe (5, 6, 7) zugeführt wird.

11. Verfahren nach Anspruch 10, **dadurch gekennzeichnet,**
**dass** einerseits dem Wasser in der oder vor Erreichen der Oxidationsstufe (5, 6, 7) oder wenigstens einer der Oxidationsstufen (5, 6, 7) Trennmittel (14, 36) beigesetzt wird, wobei nach der Aufbereitung des Wassers in der jeweiligen Oxidationsstufe (5, 6, 7) ein Teil des Wassers, der eine erhöhte Konzentration an ausgefällten Fremdstoffen enthält, durch die Fördereinrichtung (2) zurück zu der Pressstufe (3, 4) oder zu einer der Pressstufen (3, 4) geführt wird, und/oder
**dass** andererseits als die Pressstufe (4) oder eine der Pressstufen (3, 4) eine Filterpresse verwendet wird, die ein Gehäuse (24) aufweist, dem das Wasser zugeführt wird, wobei die Presseinrichtung (53) in dem Gehäuse (24) angeordnet ist und um eine vertikale Achse (58) rotiert, wobei die Presseinrichtung (53) wenigstens ein um eine, zur vertikalen Achse unter einem Winkel stehende, Drehachse rotierendes, im Querschnitt rundes Presselement (54) mit einem aus einem elastischen Material gebildeten Außenmantel (67) aufweist, mit dem das Presselement (54) auf der Filtereinrichtung (52) abrollt, wobei die Filtereinrichtung (52) ein Filtermittel sowie eine dem Filtermittel vorgeschaltete, mehrere zum Presselement (54) hin offene Durchbrechungen aufweisende Filterplatte umfasst, wobei jede der Durchbrechungen einen sich zum Filtermittel hin reduzierenden Querschnitt aufweist.

12. Verfahren nach einem der vorangehenden Ansprüche, **dadurch gekennzeichnet, dass** in der oder wenigstens einer der Oxidationsstufen (5, 6, 7) eine Walzenbaugruppe (40) zur Vergrößerung der Oberfläche des Wassers verwendet wird, die wenigstens eine Welle (87), die jeweils wenigstens eine Walze (81, 81') trägt, einen Antrieb (83) für die wenigstens eine Welle (87), eine oberhalb der jeweiligen Walze (81, 81') angeordnete Wasserzuführung (79), und eine der jeweiligen Walze (81, 81') zugeordnete Auffangwanne (82, 82') für das Wasser umfasst, wobei die Walze (81, 81') zwei in Radialrichtung beabstandete, zylindermantelförmige Mantelflächen (85, 86) aufweist, die jeweils als Gitter ausgebildet sind und an der Unterseite der Walze (81, 81') in die Auffangwanne (82, 82') hineinragen, wobei das Wasser durch die jeweilige Wasserzuführung (79) zu der jeweiligen Walze (81, 81') geführt wird, wobei die jeweilige Walze (81, 81') durch den Antrieb (83) angetrieben wird.

13. Verfahren nach Anspruch 12, **dadurch gekennzeichnet, dass** die die Walzenbaugruppe (40) umfassende Oxidationsstufe (7) einen Wasserbehälter (38) umfasst, dem das Wasser über einen Behälterzulauf (70) zugeführt wird und aus dem das Wasser durch einen Behälterablauf (71) abgeführt wird, wobei das Wasser über eine Ansaugöffnung (93) des Wasserbehälters (38), insbesondere durch eine Pumpe (39), angesaugt und der jeweiligen Wasserzuführung (79) der jeweiligen Walze (81, 81') zugeführt wird, wobei ein Wasserabfluss der Walzenbaugruppe (40), dem über eine Seitenwand (89) wenigstens einer der Auffangwannen (82) tretendes Wasser zugeführt wird, in dem Wasserbehälter (38) mündet.

14. Verfahren nach einem der vorangehenden Ansprüche, **dadurch gekennzeichnet, dass** bei Erfüllung einer, insbesondere von der Wasserqualität am Ablauf (11) abhängigen, Auslösebedingung der Zulauf zu einem Pufferbehälter (21) gesperrt wird und stattdessen Wasser aus einem Wasservorrat (51) verarbeitet wird.

15. Vorrichtung zur Wasseraufbereitung, umfassend einen Zulauf (92) zur Zuführung von aufzubereitendem Wasser, einen Ablauf (11) zur Abfuhr von aufbereitetem Wasser und eine Fördereinrichtung (2) zur Förderung des Wassers von dem Zulauf (92) zu dem Ablauf (11), wobei das Fluid durch mehrere Aufbereitungsstufen geführt wird, wobei wenigstens eine der Aufbereitungsstufen eine Oxidationsstufe (5, 6, 7) zur Oxidation von im Wasser befindlichen Fremdstoffen durch ein dem Wasser in oder vor der Oxidationsstufe (5, 6, 7) beigesetztes Oxidationsmittel (12) ist und wenigstens eine der Aufbereitungsstufen, der das Wasser nach der Verarbeitung durch die Oxidationsstufe (5, 6, 7) zugeführt wird, eine Trennstufe (8, 9) zur Ausfällung von nach der Oxidationsstufe (5, 6, 7) im Wasser befindlichen Fremdstoffen ist, wobei eine Steuereinrichtung (16) der Vorrichtung (1) zur Steuerung der Fördereinrichtung (2) und der Aufbereitungsstufen eingerichtet ist.
